# EUROPÄISCHE PATENTSCHRIFT

(11) **EP 1 195 535 B1**
(45) Veröffentlichungstag und Bekanntmachung des Hinweises auf die Patenterteilung: **12.05.2004**
(21) Anmeldenummer: 01123781.5
(22) Anmeldetag: 04.10.2001
(51) Int. Cl.: F16C 29/08

(54) **Linearführungsanordnung**
Linear guide arrangement
Dispositif de guidage linéaire

(30) Priorität: 05.10.2000 DE 10049348
(43) Veröffentlichungstag der Anmeldung: 10.04.2002
(73) Patentinhaber: Rexroth Star GmbH, 97424 Schweinfurt (DE)
(72) Erfinder: Blaurock, Günter, 97464 Niederwerrn (DE); Dütsch, German, 97424 Schweinfurt (DE); Maiss, Harald, 97525 Schwebheim (DE); Kirchner, Herbert, 97422 Schweinfurt (DE); Haub, Alfred, 97511 Lülsfeld (DE); Weidner, Richard, 97534 Theilheim (DE); Schmitt, Holger, 97508 Grettstadt (DE)
(74) Vertreter: Herzog, Markus, Dipl.-Phys. Dr.

(56) Entgegenhaltungen:
- DE-A- 3 812 505
- DE-U- 1 945 425
- JP-A- 2 300 517
- JP-A- 62 255 612
- US-A- 5 297 873
- US-A- 5 606 903
- US-A- 6 098 522
- PATENT ABSTRACTS OF JAPAN vol. 017, no. 284 (M-1421), 31. Mai 1993 (1993-05-31) -& JP 05 016043 A (INFUOMU:KK), 26. Januar 1993 (1993-01-26)
- PATENT ABSTRACTS OF JAPAN vol. 015, no. 081 (M-1086), 25. Februar 1991 (1991-02-25) & JP 02 300517 A (T ECHI K KK), 12. Dezember 1990 (1990-12-12)

## Beschreibung

Die Erfindung betrifft eine Linearführungsanordnung mit einer länglichen. Führungsschiene und einem in Längsrichtung der Führungsschiene auf dieser verfahrbaren Laufwagen, wobei eine dem Laufwagen zugewandte Oberfläche der Führungsschiene mittels eines Abdeckbands abgedeckt ist und wobei ferner im Bereich der beiden Längsenden der Führungsschiene jeweils eine Bandsicherungseinheit angeordnet ist.

Die Führungsschienen derartiger Linearführungsanordnungen sind üblicherweise mittels Schrauben, die von der dem Laufwagen zugewandten Oberfläche her in Bohrungen der Führungsschiene eingesetzt sind, an einer übergeordneten Baueinheit, beispielsweise einem Linearführungsgehäuse oder einem Montagetisch, befestigt. Um eine Störung der Bewegung des Laufwagens durch diese Bohrungen sowie eine Verschmutzung des Innenraums des Wagens infolge von Schmutzansammlungen auf der Führungsschiene, und dort insbesondere in den Befestigungsbohrungen, ausschließen zu können, sind Letztere mittels eines Abdeckbandes abgedeckt. Um einerseits Verletzungen des Bedienungspersonals zu vermeiden und andererseits einen sicheren Halt des Abdeckbandes auf der Führungsschiene gewährleisten zu können, insbesondere ein axiales Verschieben des Abdeckbandes, d.h. ein Verschieben in Längsrichtung der Führungsschiene, verhindern zu können, sind an beiden Enden der Führungsschiene Bandsicherungseinheiten, beispielsweise in Form von Schutzkappen, vorgesehen, welche das Bandende überdecken und stirnseitig mit der Führungsschiene verschraubt sind. Hierzu wird auf den Prospekt "STAR-Kugelschienenführungen" der Anmelderin mit der Identifizierungsnummer "RD 82 201/07.99" verwiesen.

Auch die aus der DE 38 12 505 A1 bekannten Bandsicherungseinheiten werden mit der Führungsschiene verschraubt.

Die vorstehend angesprochene Schraubverbindung der Bandsicherungseinheit mit der Führungsschiene wirft insbesondere bei den sogenannten "Miniatur-Führungsschienen", deren Querschnittsfläche Werte von weniger als 10 mm x 10 mm annehmen kann, Schwierigkeiten auf. Diese Führungsschienen sind nämlich üblicherweise aus einem durch und durch gehärteten Material gefertigt, so dass die erforderliche, stirnseitige Gewindebohrung in das harte Material eingebracht werden muss. Dies bedeutet einen erheblichen Fertigungsaufwand.

Aber auch bei Führungsschienen mit größerer Querschnittsfläche, bei denen üblicherweise nur die Bereiche der Laufbahnen für die Wälzkörper der Wälzkörperumläufe des Laufwagens gehärtet sind, bedeutet das Einbringen der für die Schraubverbindung zwischen der Bandsicherungseinheit und der Führungsschiene erforderlichen Gewindebohrung einen zusätzlichen Bearbeitungsschritt, der zudem an der aufgrund ihrer Länge recht umständlich zu handhabenden Führungsschiene auszuführen ist.

Aus der JP-A-5-16043 ist eine Linearführungseinheit bekannt, bei der die Bandsicherungseinheiten jeweils über eine an der Stirnseite der Führungsschiene vorgesehene Verschraubung gesichert sind.

Zum Stand der Technik sei höchstvorsorglich auf die US 5,297,873, die JP-A-62-255612 und die JP-A-2-300517 verwiesen. Diese drei Druckschriften befassen sich allesamt mit Führungsschienen ohne Abdeckband, und insbesondere mit Anschlagelementen (sogenannte "Stopper"), die zur Begrenzung des Laufwegs des Laufwagens auf der Führungsschiene eingesetzt werden.

Demgegenüber ist es Aufgabe der Erfindung, für eine Linearführungsanordnung der eingangs genannten Art Bandsicherungseinheiten für das Abdeckband der Führungsschiene anzugeben, welche eine sichere Fixierung des Bandendes an der Führungsschiene gewährleisten, ohne aufwendige Bearbeitungsvorgänge an der Schiene zu erfordern.

Diese aus dem Stand der Technik bislang noch nicht bekannte Aufgabe wird gemäß einem ersten Gesichtspunkt der Erfindung gelöst durch eine Linearführungsanordnung gemäß Anspruch 1 sowie gemäß einem zweiten Gesichtspunkt der Erfindung gelöst durch eine Linearführungsanordnung gemäß Anspruch 3.

Die Linearführungsanordnung gemäß Anspruch 1 und Anspruch 3 weist eine längliche Führungsschiene und einen in Längsrichtung der Führungsschiene auf dieser verfahrbaren Laufwagen auf, wobei eine dem Laufwagen zugewandte Oberfläche der Führungsschiene mittels eines Abdeckbandes abgedeckt ist, wobei ferner im Bereich der beiden Längsenden der Führungsschiene jeweils eine Bandsicherungseinheit angeordnet ist, wobei ferner die beiden Bandsicherungseinheiten gemeinsam das Abdeckband zumindest hinsichtlich dessen Verlagerung in Längsrichtung der Führungsschiene an der Führungsschiene sichern und wobei jede der Bandsicherungseinheiten eine auf die jeweils andere Bandsicherungseinheit zu gerichtete Bewegung des Abdeckbandes relativ zu der Führungsschiene zumindest erschwert.

Während bei den Linearführungsanordnungen des Standes der Technik die mit der Führungsschiene verschraubten Bandsicherungseinheiten als Anschlagelemente für das Abdeckband dienten, wobei jede dieser Bandsicherungseinheiten eine axiale Bewegung des Abdeckbandes über dasjenige Längsende der Führungsschiene hinaus verhinderte, an welchem auch die jeweils betrachtete Bandsicherungseinheit befestigt war, wird erfindungsgemäß nunmehr ein gänzlich anderer Lösungsweg beschritten.

Und zwar verhindert erfindungsgemäß jede der Bandsicherungseinheiten eine axiale Bewegung des Abdeckbandes über dasjenige Längsende der Führungsschiene hinaus, an welchem die jeweils andere Bandsicherungseinheit angeordnet ist.

Dies wird durch eine formschlüssige Mitnahmeverbindung zwischen der Bandsicherungseinheit und dem Abdeckband sowie gemäß Anspruch 1 einem kraftschlüssigen Eingriff zwischen Bandsicherungseinheit und Führungsschiene bzw. gemäß Anspruch 3 einem formschlüssigen Eingriff einer Anschlagfläche der Bandsicherungseinheit mit einer Gegenanschlagfläche der Führungsschiene ermöglicht. Hierdurch kann auf eine Schraubverbindung zwischen Bandsicherungseinheit und Führungsschiene verzichtet werden.

Die angesprochene formschlüssige Mitnahmeverbindung zwischen Bandsicherungseinheit und Abdeckband kann beispielsweise dadurch bereitgestellt werden, dass an einem der Teile, Bandsicherungseinheit oder Abdeckband, wenigstens ein Ansatz vorgesehen ist, der in eine zugehörige, am jeweils anderen Teil, Abdeckband oder Bandsicherungseinheit, vorgesehene Ausnehmung eingreift.

Um die bisherige Fertigung des Abdeckbandes möglichst wenig modifizieren zu müssen, wird vorgeschlagen, dass das Abdeckband, vorzugsweise annähernd in seiner Quermitte, wenigstens eine Ausnehmung aufweist, in welche ein Ansatz der Bandsicherungseinheit in einer zur Bandebene im Wesentlichen orthogonal verlaufenden Richtung eingreift. In diesem Fall braucht nämlich das bereits herkömmlich verwendete Abdeckband lediglich einem weiteren Bearbeitungsschritt unterzogen werden, beispielsweise Bohren, Stanzen oder dergleichen, um die Ausnehmung in es einzubringen.

Der angesprochene Ansatz kann an der Bandsicherungseinheit einstückig angeformt sein. Grundsätzlich ist es jedoch ebenso möglich, dass der Ansatz ein von einem Basisteil der Bandsicherungseinheit gesondert ausgebildetes Element ist, beispielsweise als Eingriffs- oder Verbindungsstift.

Alternativ zu der vorzugsweise mittigen Ausnehmung kann das Abdeckband jedoch auch wenigstens eine seitliche Ausnehmung aufweisen, in welche ein Ansatz der Bandsicherungseinheit im Wesentlichen in Querrichtung des Abdeckbandes eingreift. Bei beiden Varianten kann der Ansatz mit der Bandsicherungseinheit über einen flexiblen Steg verbunden sein, so dass er zur Herstellung des Mitnahmeeingriffs zwischen Bandsicherungseinheit und Abdeckband in die Ausnehmung des Abdeckbands rastend eingreifen kann. Die Rastverbindung kann dabei vorteilhafterweise als lösbare Rastverbindung ausgebildet sein.

Zur Bereitstellung des vorstehend angesprochenen kraftschlüssigen Eingriffs von Bandsicherungseinheit und Führungsschiene kann an der Bandsicherungseinheit wenigstens ein Klemmansatz vorgesehen sein. Dieser Klemmansatz kann beispielsweise seitlich an der Führungsschiene angreifen, vorzugsweise in in Seitenflächen der Führungsschiene vorgesehene Längsnuten der Führungsschiene eingreifen, in denen die Laufbahnen für die Wälzkörper der Wälzkörperumläufe des Laufwagens ausgebildet sind. Vorzugsweise sind an der Bandsicherungseinheit wenigstens zwei derartige Klemmansätze angeformt, die beidseits der Führungsschiene angeordnet sind. Hierdurch kann die Klemmwirkung auf die zwischen diesen Klemmansätzen aufgenommene Führungsschiene erhöht werden, und somit der Halt der Bandsicherungseinheit an der Führungsschiene.

Zur Bereitstellung des vorstehend angesprochenen formschlüssigen Eingriffs von Bandsicherungseinheit und Führungsschiene, der zumindest bezüglich einer auf die jeweils andere Bandsicherungseinheit zu gerichteten Bewegung der betrachteten Bandsicherungseinheit aktiv ist, kann diese betrachtete Bandsicherungseinheit einen sich im Wesentlichen orthogonal zur Längsrichtung der Führungsschiene erstreckenden Flansch aufweisen, der im montierten Zustand der Linearführungsanordnung einer Stirnfläche der Führungsschiene gegenüberliegt bzw. an dieser anliegt. Da als führungsschienenseitige Anschlagfläche die gesamte Stirnfläche der Führungsschiene zur Verfügung steht und auch auf Seiten der Bandsicherungseinheit die Anschlagfläche des Flansches entsprechend groß ausgebildet sein kann, verteilen sich die zu übertragenden Kräfte über eine relativ große Fläche, was aufgrund der damit einhergehenden Druckminderung das Risiko einer Beschädigung vor allem der Bandsicherungseinheit reduziert.

Die Tatsache, dass an der Stirnseite der Führungsschiene ohnehin Bauraum für den Flansch vorgesehen werden muss, kann dazu genutzt werden, auch die formschlüssige Verbindung zwischen Abdeckband und Bandsicherungseinheit in diesen Bereich zu verlegen. Hierzu kann beispielsweise das Abdeckband eine größere Länge aufweisen als die Führungsschiene und kann das Abdeckband mit der Bandsicherungseinheit in einem über die Führungsschiene hinausragenden Abschnitt formschlüssig verbunden sein. Insbesondere bei Einsatz eines Haltestifts, der in eine Ausnehmung des Abdeckbandes formschlüssig eingreift, können die vom Abdeckband in diesen Stift eingeleiteten Kräfte über eine relativ große Oberfläche an die Bandsicherungseinheit weitergeleitet werden, was wiederum deren Beschädigungsrisiko senkt. Der Haltestift kann beispielsweise von einem Schraubbolzen gebildet sein.

Zur sicheren Führung des Abdeckbandes wird vorgeschlagen, dass die Bandsicherungseinheit eine Vertiefung, vorzugsweise einen Durchgang, aufweist, in welche der über die Führungsschiene hinausragende Abschnitt des Abdeckbandes eingeführt werden kann. Dabei kann die Bandsicherungseinheit aus wenigstens zwei Teilen gebildet sein, wobei das eine Teil eine obere Begrenzungsfläche und das andere Teil eine untere Begrenzungsfläche der Vertiefung bzw. des Durchgangs aufweist, und wobei vorzugsweise beide seitlichen Begrenzungsflächen der Vertiefung bzw. des Durchgangs an ein und demselben Teil ausgebildet sind. Die wenigstens zwei Teile können dabei vorzugsweise durch Rastverbindungen aneinander gesichert werden. Als weiteres Teil der Bandsicherungseinheit kann ein gesonderter Haltestift vorgesehen sein. Es ist jedoch auch möglich, den Haltestift mit einem der beiden Teile einstückig auszuführen.

Zur Vereinfachung ihrer Fertigung kann die Bandsicherungseinheit zumindest teilweise als Kunststoff- oder Metall-Spritzgussteil gefertigt sein.

Gemäß einem unabhängigen dritten Gesichtspunkt der Erfindung kann die gewünschte schraubverbindungslose Sicherung des Abdeckbandes an der Führungsschiene auch erzielt werden durch eine Längsführungsanordnung mit einer länglichen Führungsschiene und einem in Längsrichtung der Führungsschiene auf dieser verfahrbaren Laufwagen, wobei eine dem Laufwagen zugewandte Oberfläche der Führungsschiene mittels eines Abdeckbandes abgedeckt ist, wobei ferner im Bereich wenigstens eines der beiden Längsenden der Führungsschiene eine Bandsicherungseinheit angeordnet ist, und wobei wenigstens eine der Bandsicherungseinheiten sowohl mit dem Abdeckband als auch mit der Führungsschiene kraftschlüssig in Eingriff steht.

Durch den kraftschlüssigen Eingriff der Bandsicherungseinheit mit der Führungsschiene wird dabei auch der kraftschlüssige Eingriff der Bandsicherungseinheit mit dem Abdeckband sichergestellt, wobei gleichzeitig vorzugsweise auch ein direkter kraftschlüssiger Eingriff zwischen Abdeckband und Führungsschiene herbeigeführt wird. Dies kann beispielsweise dadurch erreicht werden, dass die Bandsicherungseinheit als Klemmbügeleinheit ausgebildet ist. Diese Klemmbügeleinheit kann zwei freie Enden aufweisen, die seitlich an der Führungsschiene angreifen, vorzugsweise jeweils in eine Längsnut der Führungsschiene eingreifen. In dieser Längsnut kann wiederum jeweils wenigstens eine Laufbahn für die Wälzkörper eines Wälzkörperumlaufs des Laufwagens ausgebildet sein.

Zur Herstellung der gewünschten kraftschlüssigen Verbindungen kann die Klemmbügeleinheit ferner in einem zwischen ihren beiden freien Enden angeordneten Abschnitt (Mittelabschnitt) das Abdeckband gegen die Führungsschiene andrücken. Dabei sei betont, dass mit dem Begriff "Mittelabschnitt" nicht notwendigerweise die geometrische Mitte zwischen den beiden freien Enden der Klemmbügeleinheit gemeint sein muss. Vielmehr kann die Andrückstelle auch in einem eher seitlich gelegenen Abschnitt der Klemmbügeleinheit vorgesehen sein, solange dieser nur zwischen den beiden freien Enden der Klemmbügeleinheit angeordnet ist.

Die Klemmbügeleinheit kann beispielsweise einen ein- oder mehrteilig ausgeführten Klemmbügel aufweisen, der vorzugsweise aus einem elastischen Material gefertigt sein kann, beispielsweise Matall oder Kunststoff. Zur Erzielung des kraftschlüssigen Eingriffs mit dem Abdeckband kann der Klemmbügel bzw. wenigstens ein Klemmbügelteil im Bereich des Mittelabschnitts der Klemmbügeleinheit mit einer, vorzugsweise in Form einer Sicke gestalteten, Ausbuchtung ausgebildet sein.

Um den gewünschten Kraftschluss stets zuverlässig sicherstellen zu können, kann die Klemmbügeleinheit ferner eine Spannvorrichtung umfassen, mittels derer die Andrückkraft der Klemmbügeleinheit gegen das Abdeckband einstellbar ist.

Diese Spannvorrichtung kann gemäß einer ersten Ausführungsvariante eine Vorrichtung zur Veränderung des Abstands zwischen einem ersten Abschnitt des Klemmbügels und einem hierzu vorzugsweise im Wesentlichen parallel verlaufenden, an ein freies Ende des Klemmbügels angrenzenden zweiten Abschnitts des Klemmbügels umfassen. Diese Abstandsveränderungsvorrichtung kann beispielsweise ein Schraubbolzen sein, der Öffnungen der beiden Abschnitte des Klemmbügels durchsetzt, wobei die Öffnung des dem Kopf des Schraubbolzens ferngelegenen Abschnitts des Klemmbügels mit einem mit dem Schraubengewinde zusammenwirkenden Innengewinde versehen ist, während die Öffnung des dem Kopf des Schraubbolzens benachbarten Abschnitts so groß bemessen ist, dass der mit dem Schraubengewinde versehene Schaft des Schraubbolzens sie wechselwirkungsfrei durchsetzen kann.

Bei einer mehrteiligen Ausführung des Klemmbügels kann in entsprechender Weise vorgesehen sein, dass die Spannvorrichtung eine Vorrichtung zur Veränderung des Abstands zwischen einem ersten Klemmbügelteil und einem hierzu vorzugsweise im Wesentlichen parallel verlaufenden, an ein freies Ende des Klemmbügels angrenzenden zweiten Klemmbügelteils umfasst.

Der Mittelabschnitt der Klemmbügeleinheit kann dabei an beiden Klemmbügelteilen vorgesehen sein. Ist er an dem ersten Klemmbügelteil vorgesehen, so kann sich das zweite Klemmbügelteil auf einer vom Abdeckband abgewandten Seite des ersten Klemmbügelteils an diesem abstützen. Der erwünschte kraftschlüssige Eingriff zwischen der Klemmbügeleinheit und dem Abdeckband kann dabei sowohl dann erzielt werden, wenn sich das zweite Klemmbügelteil im Mittelabschnitt der Klemmbügeleinheit am ersten Klemmbügelteil abstützt, als auch dann, wenn sich das zweite Klemmbügelteil an einem Abschnitt des ersten Klemmbügelteils abstützt, der sich auf der dem freien Ende des ersten Klemmbügelteils gegenüberliegenden Seite an den Mittelabschnitt anschließt.

Gemäß einer zweiten Ausführungsvariante kann die Spannvorrichtung ein Spannelement umfassen, das eines der freien Enden der Klemmbügeleinheit bildet. Auch in diesem Fall kann das Spannelement von einer Spannschraube gebildet sein, die mit dem Klemmbügel bzw. wenigstens einem Klemmbügelteil in Schraubeingriff steht.

Gemäß einer ersten Untervariante dieser zweiten Ausführungsvariante kann die Spannschraube einen konisch ausgebildeten Kopf und eine vorzugsweise orthogonal zur Abdeckbandebene verlaufende Schraubenachse aufweisen, welche mit der Konusfläche in eine seitliche Längsnut der Führungsschiene eingreift. Durch Eindrehen der Spannschraube in den Klemmbügel bzw. das zugehörige Klemmbügelteil wird der gewünschte kraftschlüssige Eingriff von Klemmbügeleinheit und Abdeckband, d.h. die gewünschte Klemmwirkung zwischen diesen beiden Teilen, erzielt.

Gemäß einer zweiten Untervariante wird vorgeschlagen, dass die Spannschraube eine konisch ausgebildete Spitze und eine vorzugsweise im Wesentlichen in Querrichtung des Abdeckbandes verlaufende Schraubenachse aufweist, welche mit der Konusfläche an einer Kante einer seitlichen Längsnut der Führungsschiene anliegt. Beim Eindrehen der Spannschraube in den Klemmbügel bzw. das zugehörige Klemmbügelteil wandert die Schraubenachse von der Abdeckbandebene weg, was wiederum den gewünschten kraftschlüssigen Eingriff zwischen Klemmbügeleinheit und Abdeckband herstellt bzw. verstärkt.

Gemäß einer dritten Untervariante kann schließlich die Spannschraube an der Führungsschiene seitlich angreifen, wobei ihre Schraubenachse zumindest teilweise in einer zur Abdeckbandebene im Wesentlichen orthogonalen Richtung verläuft. Durch den zur Abdeckbandebene zumindest schrägen Verlauf der Schraubenachse wird beim Eindrehen der Spannschraube in den Klemmbügel bzw. das zugehörige Klemmbügelteil wiederum der gewünschte Kraftschluss zwischen Klemmbügeleinheit und Abdeckband hergestellt bzw. verstärkt.

Gemäß einer weiteren alternativen Ausführungsvariante kann die Spannvorrichtung aber auch einen Exzenter aufweisen, der an der Klemmbügeleinheit vorzugsweise in deren Mittelabschnitt um eine Achse verdrehbar gelagert und mit seiner Umfangsfläche gegen das Abdeckband andrückbar ist.

Schließlich kann gemäß einer weiteren Ausführungsvariante auch vorgesehen sein, dass der Klemmbügel im Bereich eines Seitenrandes des Abdeckbandes einen größeren Orthogonalabstand von diesem aufweist als im Bereich des jeweils anderen Seitenrands und dass die Spannvorrichtung einen in Querrichtung des Abdeckbandes verlagerbaren Schiebekeil umfasst.

Bei allen vorstehend diskutierten Ausführungsformen kann der seitliche Halt des Abdeckbands relativ zu der Führungsschiene dadurch gewährleistet werden, dass das Abdeckband mit seinen Seitenrändern auf die Führungsschiene aufgerastet ist.

Schließlich kann der kraftschlüssige Eingriff zwischen der Klemmbügeleinheit und dem Abdeckband auch dadurch erzielt werden, dass die Spannvorrichtung, beispielsweise die Spannschraube, seitlich gegen einen der Seitenränder des Abdeckbandes andrückt. Die Spannschraube bildet in diesem Fall vorzugsweise wiederum eines der freien Enden der Klemmbügeleinheit und zieht infolge des Andrückens gegen den Seitenrand des Abdeckbandes das andere freie Ende der Klemmbügeleinheit in seitliche Anlage gegen die Führungsschiene bzw. in seitlichen Eingriff in eine Längsnut der Führungsschiene.

Die Erfindung wird im Folgenden an einigen Ausführungsbeispielen anhand der beigefügten Zeichnungen näher erläutert werden. Es stellt dar:
- Fig. 1: eine schematische Querschnittsansicht orthogonal zur Längsachse der Führungsschiene einer ersten erfindungsgemäßen Linearführungsanordnung;
- Fig. 2: eine seitliche Schnittansicht der Linearführungsanordnung aus Fig. 1 längs der Linie II-II in Fig. 1;
- Fig. 3: eine Ansicht ähnlich Fig. 2 einer abgewandelten Ausführungsform;
- Fig. 4: eine teilweise geschnittene Draufsicht einer weiteren Ausführungsvariante;
- Fig. 5: eine Ansicht ähnlich Fig. 2 einer weiteren Ausführungsform;
- Fig. 6: eine längs der Linie VI-VI in Fig. 5 genommene teilweise geschnittene Ansicht der Bandsicherungseinheit der Ausführungsform gemäß Fig. 5;
- Fig. 7 und 8: Ansichten ähnlich Fig. 5 und 6 einer weiteren erfindungsgemäßen Linearführungsanordnung;
- Fig. 9: eine Ansicht ähnlich Fig. 1 einer erfindungsgemäßen Linearführungsanordnung mit als Klemmbügeleinheit ausgeführter Bandsicherungseinheit;
- Fig. 10 bis 19: weitere Ausführungsvarianten von Linearführungsanordnungen mit Klemmbügel-Bandsicherungseinheit.

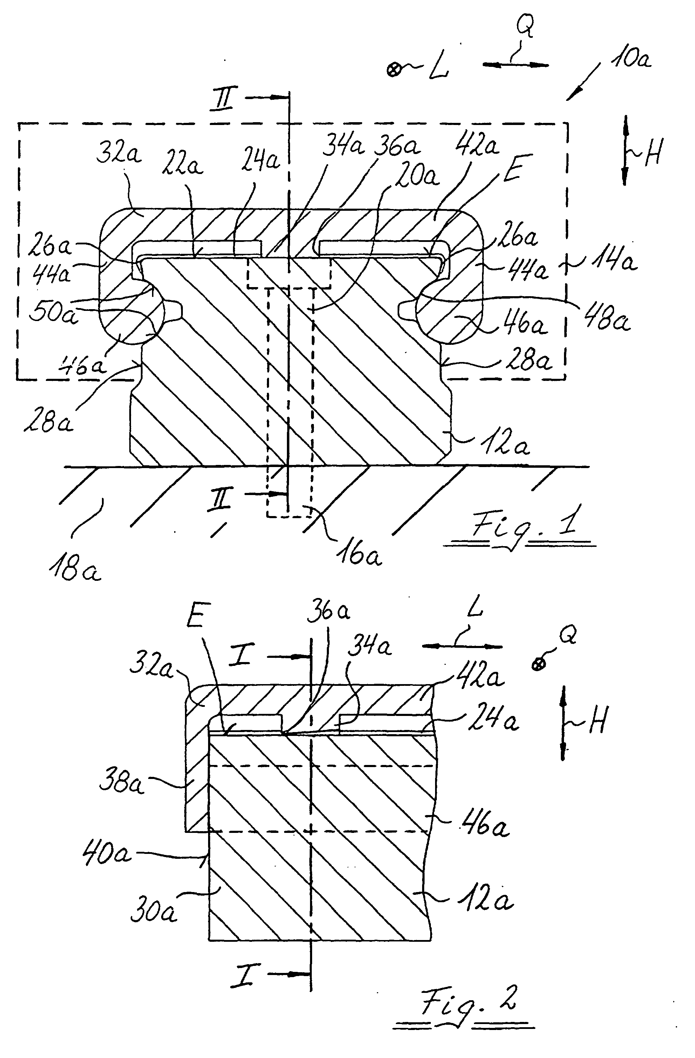

In Fig. 1 ist eine erfindungsgemäße Linearführungsanordnung allgemein mit 10a bezeichnet. Sie umfasst eine sich in Richtung einer Längsachse L (Längsrichtung) erstreckende Führungsschiene 12a und einen auf dieser Führungsschiene in Längsrichtung L verschiebbar gelagerten Laufwagen 14a, der in Fig. 1 lediglich grob schematisch gestrichelt angedeutet ist. Die Führungsschiene 12a ist mittels Schraubbolzen 16a an einer übergeordneten Baueinheit 18a befestigt. Damit die gleichförmige Bewegung des Laufwagens 14a in Längsrichtung L nicht durch die Schraubbolzen 16a bzw. die hierfür vorgesehenen Bohrungen 20a in der Führungsschiene 12a beeinträchtigt werden kann, ist die Oberseite 22a der Führungsschiene 12a mittels eines Abdeckbandes 24a abgedeckt.

Um ein Verrutschen des Abdeckbandes 24a relativ zur Führungsschiene 12a in deren (zur Längsrichtung L orthogonalen) Querrichtung Q zu verhindern, weist das Abdeckband 24a abgeknickte Seitenränder 26a auf, die an den Seitenflächen 28a der Führungsschiene 12a anliegen. Vorzugsweise sind die Seitenflächen 28a dem Abdeckband 24a benachbart leicht hinterschnitten ausgebildet und sind die Seitenränder 26a des Abdeckbandes 24a leicht spitzwinkling abgeknickt, so dass das Abdeckband 24a auf die Führungsschiene 12a aufgeschnappt werden kann.

Um eine Relativbewegung von Abdeckband 24a und Führungsschiene 12a in Längsrichtung L zu verhindern, ist an beiden Längsenden 30a (siehe Fig. 2) der Führungsschiene 12a eine Bandsicherungseinheit 32a angeordnet.

In dem in den Fig. 1 und 2 dargestellten Ausführungsbeispiel steht die Bandsicherungseinheit 32a sowohl mit dem Abdeckband 24a als auch mit der Führungsschiene 12a in formschlüssigem Eingriff. Die Bandsicherungseinheit 32a weist hierzu zum einen einen Ansatz 34a auf, der in eine Öffnung 36a des Abdeckbandes 24a eingreift und weist zum anderen einen Flansch 38a auf, der an einer Stirnfläche 40a der Führungsschiene 12a anliegt. Die Ausnehmung 36a ist etwa in der Quermitte des Abdeckbandes 24a vorgesehen.

Sowohl der Ansatz 34a als auch der Flansch 38a sind einstückig an einer Basisplatte 42a der Bandsicherungseinheit 32a angeformt und erstrecken sich ausgehend von dieser im Wesentlichen in einer (sowohl zur Querrichtung Q als auch zur Längsrichtung L orthogonal verlaufenden) Höhenrichtung H. Die Basisplatte 42a verläuft im Wesentlichen parallel zu der Abdeckbandebene E, die ihrerseits zu der von Längsrichtung L und Querrichtung Q aufgespannten Ebene parallel verläuft.

Wird auf das Abdeckband 24a, beispielsweise aufgrund einer Bewegung des Laufwagens 14a auf der Laufschiene 12a eine in Fig. 2 nach rechts gerichtete Kraft ausgeübt, die das Abdeckband 24a relativ zur Führungsschiene 12a zu verlagern sucht, so wird diese Kraft durch den Eingriff des Ansatzes 34a in die Ausnehmung 36a des Abdeckbandes 24a an die Bandsicherungseinheit bzw. Bandsicherungskappe 32a und von dieser über den Flansch 38a an die Stirnfläche 40a der Führungsschiene 12a weitergeleitet. Die hieraus resultierende Gegenkraft der Führungsschiene 12a verhindert somit unter Vermittelung der Bandsicherungseinheit 32a eine Bewegung des Abdeckbandes 24a in Fig. 2 nach rechts, d.h. eine auf das andere Längsende der Führungsschiene 12a bzw. die an diesem anderen Ende angeordnete Bandsicherungseinheit zu gerichtete Bewegung des Abdeckbandes 24a.

In analoger Weise verhindert die an dem anderen Längsende der Führungsschiene 12a angeordnete Bandsicherungseinheit eine in Fig. 2 nach links gerichtete Bewegung des Abdeckbandes 24a relativ zur Führungsschiene 12a.

Zusätzlich zu dem vorstehend beschriebenen formschlüssigen Eingriff zwischen der Bandsicherungseinheit 32a und der Führungsschiene 12a steht die Bandsicherungseinheit 32a in der in den Fig. 1 und 2 dargestellten Ausführungsform mit der Führungsschiene 12a auch kraftschlüssig in Eingriff. Hierzu sind an den beiden Seitenrändern der Basisplatte 42a der Bandsicherungseinheit 32a in Höhenrichtung H von dieser Basisplatte 42a nach unten abstehende Flansche 44a angeformt, an deren freien Enden Eingriffswulste 46a angeordnet sind. Mit diesen Wulsten 46a greift die Bandsicherungseinheit 32a in zwei sich in Längsrichtung L erstreckende Längsnuten 48a der Führungsschiene 12a derart ein. Zusätzlich zu dieser kraftschlüssigen Sicherung bezüglich einer Bewegung der Bandsicherungseinheit 32a relativ zur Führungsschiene 12a in Längsrichtung L wird durch die Eingriffswulste 46a formschlüssig auch eine Relativbewegung von Bandsicherungseinheit 32a und Führungsschiene 12a in Höhenrichtung H verhindert.

Nachzutragen ist noch, dass in den Längsnuten 48a die Laufbahnen 50a für die Wälzkörper der nicht dargestellten Wälzkörperumläufe des Laufwagens 14a ausgebildet sind.

In Fig. 3 ist eine weitere Ausführungsform einer erfindungsgemäßen Linearführungsanordnung dargestellt, welche im Wesentlichen der Ausführungsform gemäß Fig. 1 und 2 entspricht. Daher sind in Fig. 3 analoge Teile mit gleichen Bezugszeichen versehen wie in Fig. 1 und 2, jedoch mit dem Kleinbuchstaben "b" anstelle von "a". Die Ausführungsform gemäß Fig. 3 wird im Folgenden nur insoweit beschrieben werden, als sie sich von der Ausführungsform gemäß Fig. 1 und 2 unterscheidet, auf deren Beschreibung ansonsten hiermit ausdrücklich verwiesen sei.

Bei der in Fig. 3 in einer Ansicht ähnlich Fig. 2 dargestellten Linearführungsanordnung 1 0b, deren Schnittansicht längs der Linie S-S der Darstellung gemäß Fig. 1 identisch ist, steht die Bandsicherungseinheit 32b mit der Führungsschiene 12b bezüglich einer Relativbewegung zu dieser in Längsrichtung L lediglich über die Wulste 46b in kraftschlüssigem Eingriff, da sie über keinen dem Flansch 38a entsprechenden Flansch verfügt. Mit dem Abdeckband 24b steht die Bandsicherungseinheit 32b jedoch genau wie bei der Ausführungsform gemäß Fig. 1 und 2 über einen in die Ausnehmung 36b des Abdeckbands 24b eingreifenden Ansatz 34b in formschlüssigem Eingriff.

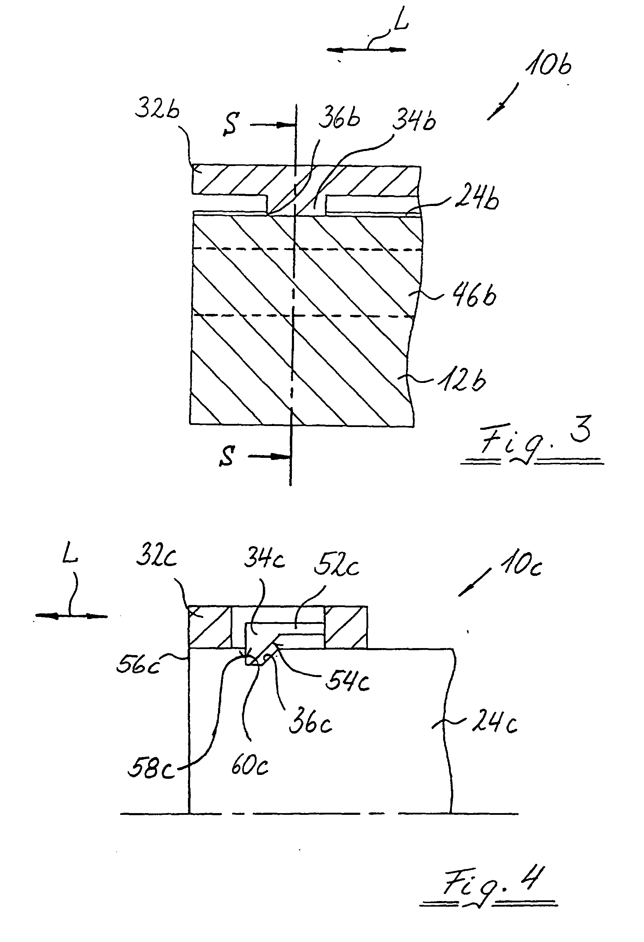

In Fig. 4 ist eine weitere Ausführungsform einer erfindungsgemäßen Linearführungsanordnung dargestellt, welche im Wesentlichen der Ausführungsform gemäß Fig. 1 und 2 entspricht. Daher sind in Fig. 4 analoge Teile mit gleichen Bezugszeichen versehen wie in Fig. 1 und 2, jedoch mit dem Kleinbuchstaben "c" anstelle von "a". Die Ausführungsform gemäß Fig. 4 wird im Folgenden nur insoweit beschrieben werden, als sie sich von den Ausführungsformen gemäß Fig. 1 bis 3 unterscheidet, auf deren Beschreibung ansonsten hiermit ausdrücklich verwiesen sei.

Anhand der Linearführungsanordnung 10c gemäß Fig. 4 soll eine weitere Möglichkeit einer formschlüssigen Verbindung der Bandsicherungseinheit 32c mit dem Abdeckband 24c erläutert werden. Gemäß dieser Ausführungsform weist das Abdeckband anstelle einer mittigen Ausnehmung seitliche Ausnehmungen 36c auf, in welche Rastansätze 34c der Bandsicherungseinheit 32c eingreifen. Die Rastansätze 34c sind an der Bandsicherungseinheit 32c einstückig angeformt und stehen mit dieser über flexible Stege 52c in Verbindung.

Wird das Abdeckband 24c in Längsrichtung L in der Darstellung gemäß Fig. 4 von rechts in die Bandsicherungseinheit eingeführt, so werden die Rastansätze 34c aufgrund des Zusammenwirkens einer Einweisungsschräge 54c mit dem vorauslaufenden Ende 56c des Abdeckbands 24c unter elastischer Verformung der Stege 52c ausgelenkt, bis sie in den Bereich der Ausnehmungen 36c gelangen und in diese einrasten. Wird das Abdeckband 24c in der Darstellung gemäß Fig. 4 hingegen nach rechts zurückgezogen, so wird eine Relativbewegung von Bandsicherungseinheit 32c und Abdeckband 24c durch die gegenseitige Anlage der Stirnfläche 58c des Rastelements 34c mit der Begrenzungsfläche 60c der Ausnehmung 36c verhindert. Diese beiden Flächen 58c und 60c verlaufen im Wesentlichen orthogonal zur Längsrichtung L.

Hinsichtlich des Eingriffs der Bandsicherungseinheit 32c mit der Führungsschiene kann die Linearführungsanordnung 10c entweder entsprechend der Ausführungsform gemäß Fig. 1 und 2 (formschlüssiger Eingriff) oder entsprechend der Ausführungsform gemäß Fig. 3 (kraftschlüssiger Eingriff) ausgebildet sein.

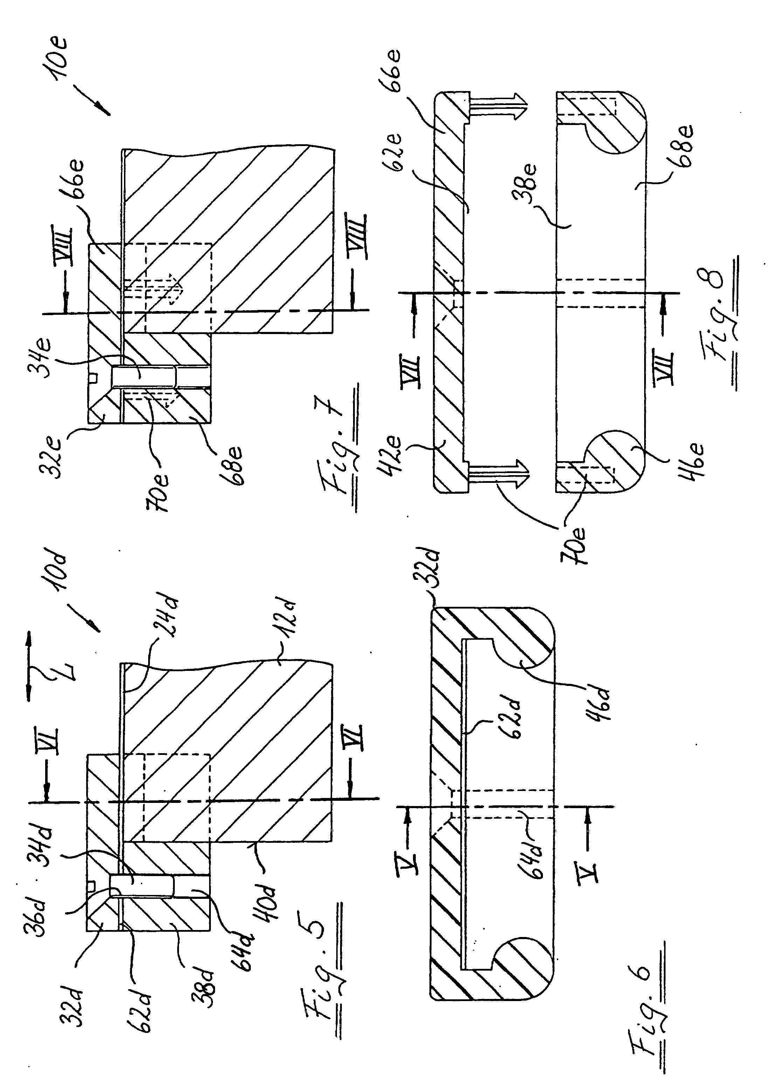

In Fig. 5 und 6 ist eine weitere Ausführungsform einer erfindungsgemäßen Linearführungsanordnung dargestellt, welche im Wesentlichen der Ausführungsform gemäß Fig. 1 und 2 entspricht. Daher sind in Fig. 5 und 6 analoge Teile mit gleichen Bezugszeichen versehen wie in Fig. 1 und 2, jedoch mit dem Kleinbuchstaben "d" anstelle von "a". Die Ausführungsform gemäß Fig. 5 und 6 wird im Folgenden nur insoweit beschrieben werden, als sie sich von den Ausführungsformen gemäß Fig. 1 bis 4 unterscheidet, auf deren Beschreibung ansonsten hiermit ausdrücklich verwiesen sei.

Bei der in den Fig. 5 und 6 dargestellten Linearführungsanordnung 10d ist der Flansch 38d der Bandsicherungseinheit 32d in Längsrichtung L dicker bemessen als bei der Ausführungsform gemäß Fig. 1 und 2. Dies ermöglicht es, die formschlüssige Verbindung zwischen dem Abdeckband 24d und der Bandsicherungseinheit 32d in einen über die Stirnfläche 40d der Führungsschiene 12d hinausragenden Abschnitt zu verlegen. Hierzu weist die Bandsicherungseinheit 32d einen Durchgang 62d auf, in welchen sich das Abdeckband 24d hinein erstreckt. In dieser Position wird das Abdeckband 24d durch einen Haltestift, beispielsweise einen Schraubbolzen 34d gesichert, der die Ausnehmung 36d des Abdeckbands 24d durchsetzt und in eine Gewindebohrung 64d der Bandsicherungseinheit 32d eingeschraubt ist.

Diese Ausbildung ermöglicht eine großflächige Weiterleitung der vom Abdeckband 24d auf den Sicherungsstift 34d ausgeübten Kräfte an die Bandsicherungseinheit 32d und von dort aus weiter an die Führungsschiene 12d. Die hiermit einhergehende Reduzierung des pro Flächeneinheit auf die Bandsicherungseinheit 32d ausgeübten Drucks senkt das Risiko einer Beschädigung der Bandsicherungseinheit 32d.

Wie bei der Ausführungsform gemäß Fig. 1 und 2 steht die Bandsicherungseinheit 32d mit der Führungsschiene 12d hinsichtlich einer Relativbewegung in Längsrichtung L ferner über Klemmwulste 46d in kraftschlüssigem Eingriff.

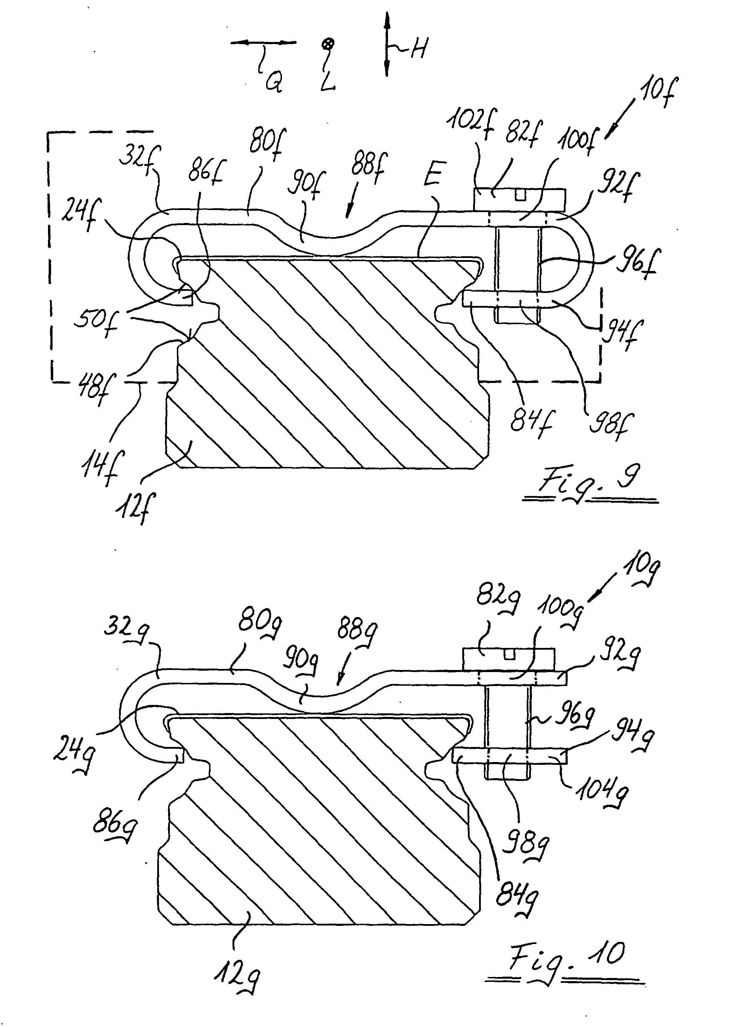

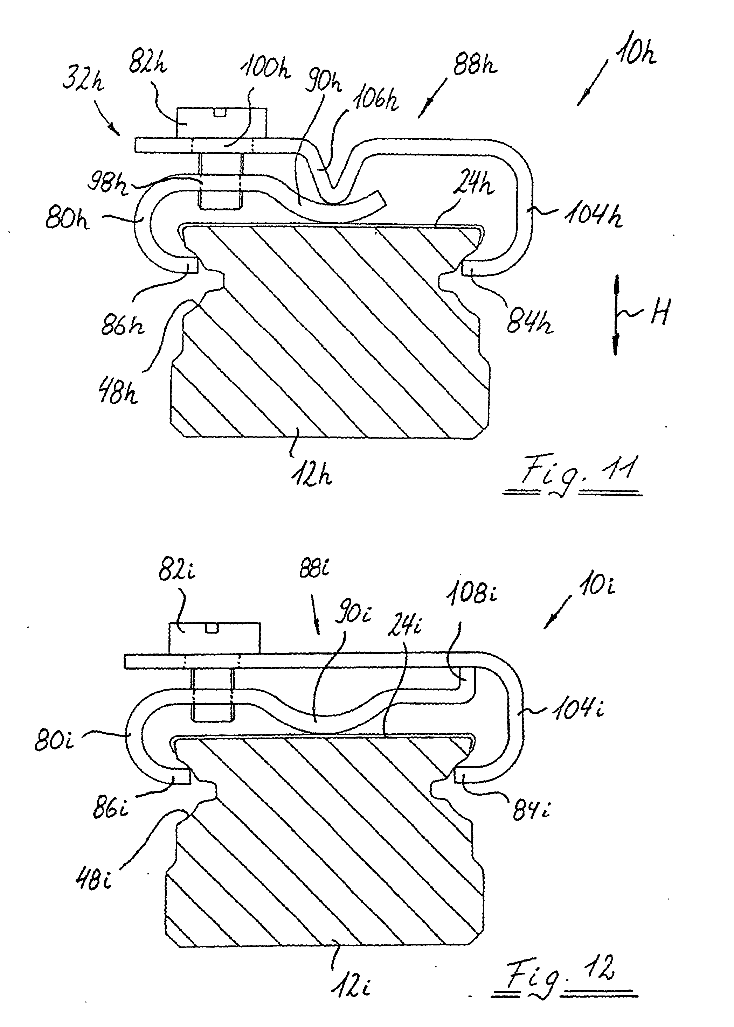

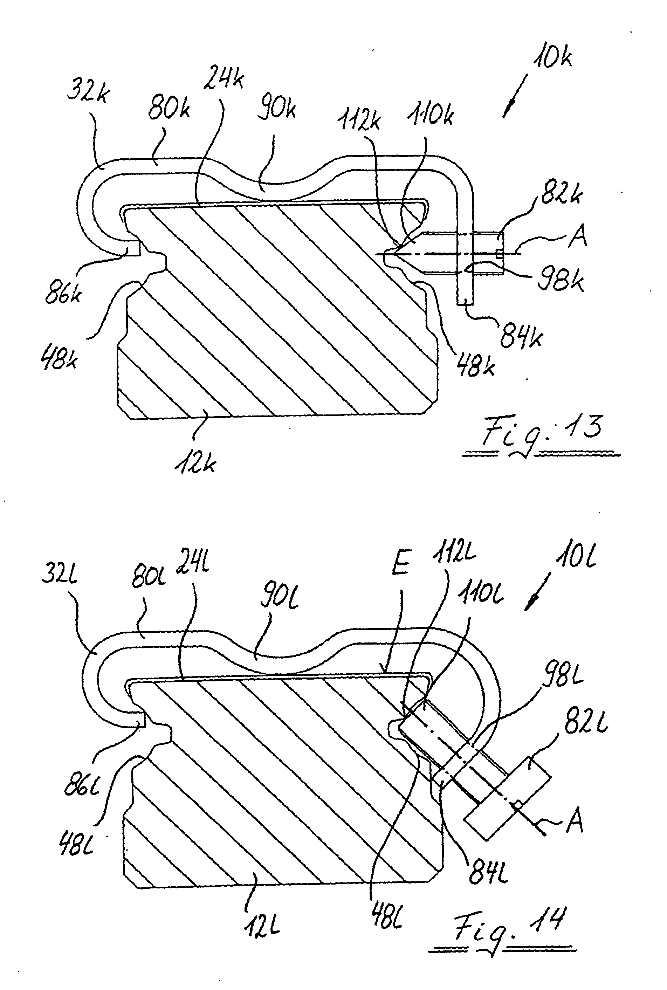

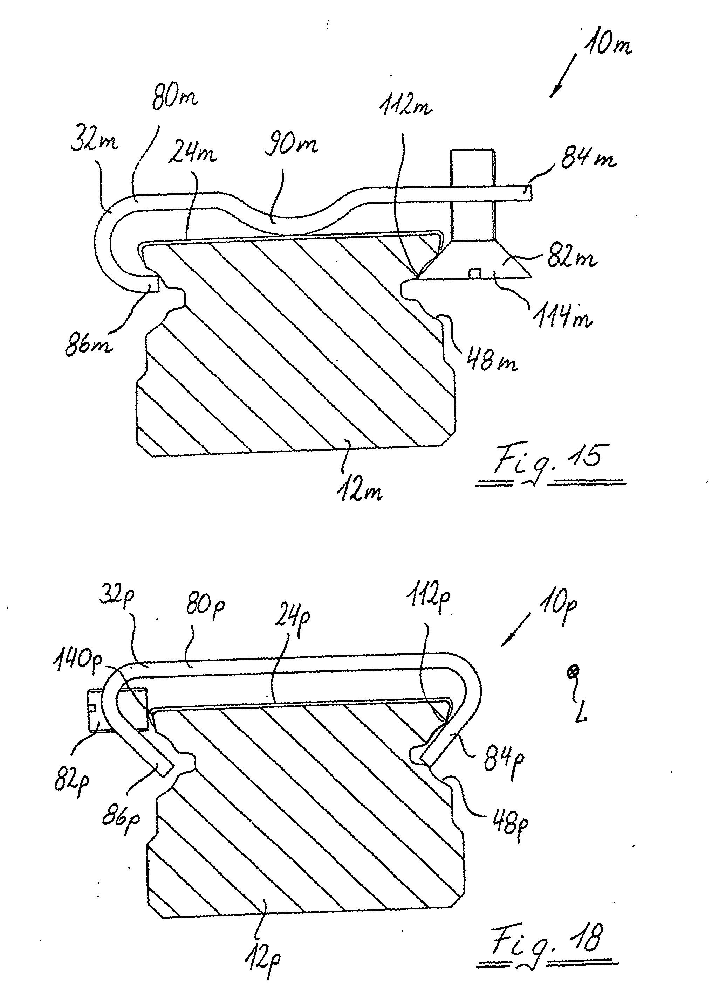

Die Linearführungsanordnung 10e gemäß Fig. 7 und 8 unterscheidet sich von der Linearführungsanordnung 10d gemäß Fig. 5 und 6 lediglich dadurch, dass die Bandsicherungseinheit 32e nicht nur hinsichtlich der gesonderten Ausbildung des Sicherungsstifts 34e mehrteilig ausgebildet ist. Vielmehr umfasst sie ein erstes Teil 66e, das im Wesentlichen die Basisplatte 42e bildet, und ein zweites Teil 68e, an welchem der Flansch 38e und die Klemmwülste 46e ausgebildet sind. Mittels Rastverbindungen 70e können die beiden Teile 66e und 68e aneinander befestigt werden. Der Grund für diese mehrteilige Ausbildung liegt in einer fertigungstechnischen Vereinfachung der Ausbildung des Durchgangs 62e für das Abdeckband 24e.

Bei dieser Ausführungsform ist es weiter denkbar, den Sicherungsstift 34e an einem der beiden Teile 66e, 68e einstückig mit anzuformen.

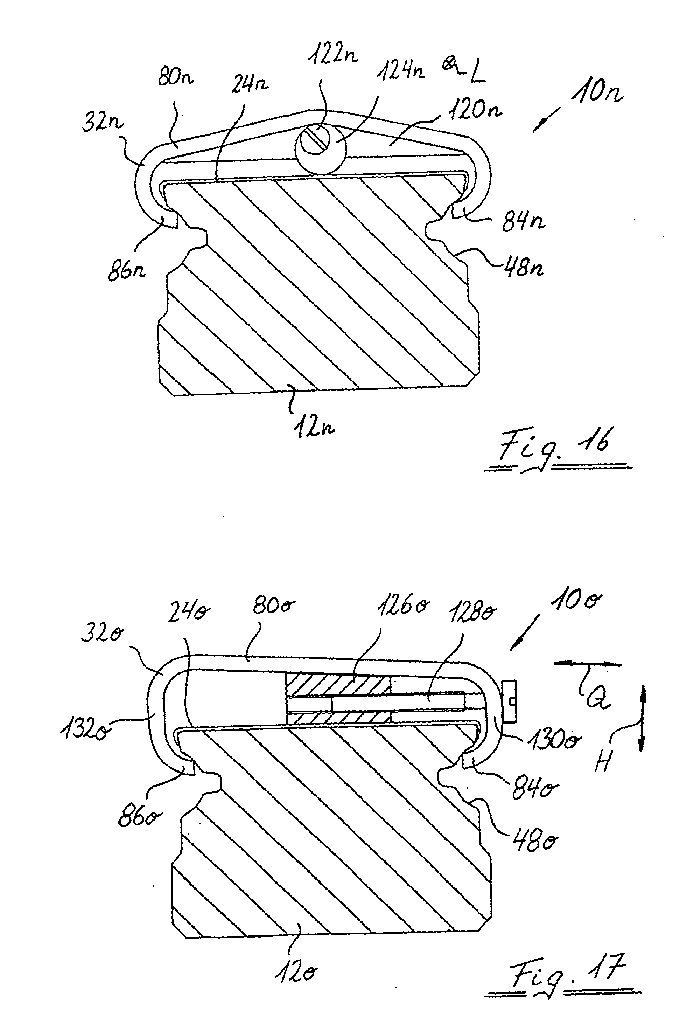

Während bei den vorstehend beschriebenen Ausführungsformen gemäß Fig. 1 bis 8 die Bandsicherungseinheit 32 mit dem Abdeckband 24 in formschlüssigem Eingriff steht, sollen im Folgenden Ausführungsformen erläutert werden, bei denen die Bandsicherungseinheit 32 mit dem Abdeckband 24 in kraftschlüssigem Eingriff steht. Ferner sei darauf hingewiesen, dass bei diesen Ausführungsformen gemäß Fig. 9 bis 19 die Bandsicherungseinheit 32 auch mit der Führungsschiene 12 in kraftschlüssigem Eingriff steht. Es sei jedoch bereits an dieser Stelle darauf hingewiesen, dass auch Ausführungsformen denkbar sind, bei denen die Bandsicherungseinheit 32 mit dem Abdeckband 24 in kraftschlüssigem, mit der Führungsschiene 12 aber in formschlüssigem bzw. in formschlüssigem und kraftschlüssigem Eingriff steht.

Hinsichtlich der Befestigung der Führungsschienen 12 an der übergeordneten Baugruppe 18 sei hinsichtlich der Ausführungsformen gemäß Fig. 9 bis 19 auf die vorstehende Beschreibung der Ausführungsform gemäß Fig. 1 und 2 verwiesen.

Bei der Linearführungsanordnung 10f gemäß Fig. 9 ist die Bandsicherungseinheit 32f von einer Klemmbügeleinheit gebildet, die einen Klemmbügel 80f und eine Spannschraube 82f umfasst. Der Klemmbügel 80f greift mit seinen beiden freien Enden 84f und 86f in die Längsnuten 48f der Führungsschiene 12f ein, in denen auch die Laufbahnen 50f für die Wälzkörper der Wälzkörperumläufe des Laufwagens 14f angeordnet sind. In einem zwischen den beiden freien Enden 84f und 86f gelegenen Mittelabschnitt 88f ist der Klemmbügel 80f mit einer Ausbuchtung 90f in Form einer Sicke ausgebildet, welche in Höhenrichtung H von oben, d.h. orthogonal zu der von Längsrichtung L und Querrichtung Q aufgespannten Ebene E des Abdeckbands 24f gegen dieses Abdeckband 24f andrückt. Hierdurch wird gleichzeitig auch das Abdeckband 24f in kraftschlüssigen Eingriff mit der Führungsschiene 12f gegen diese Führungsschiene 12f angedrückt.

Mit Hilfe der Spannschraube 82f kann der kraftschlüssige Eingriff zwischen Klemmbügel 80f und Abdeckband 24f einerseits und Abdeckband 24f und Führungsschiene 12f andererseits hergestellt bzw. verstärkt oder auch geschwächt bzw. aufgehoben werden. Die Spannschraube 82f durchsetzt hierzu zwei zueinander im Wesentlichen parallel verlaufende Abschnitte 92f und 94f des Klemmbügels 80f, wobei sie mit ihrem Schraubgewinde 96f mit einem Innengewinde des Durchgangs 98f des Klemmbügelabschnitts 94f in Gewindeeingriff steht, während sie einen Durchgang 100f des Klemmbügelabschnitts 92f mit Spiel durchsetzt. Der Durchmesser des Durchgangs 100f ist dabei jedoch kleiner bemessen als der Durchmesser des Kopfes 102f der Spannschraube 82f. Wird nun die Spannschraube 82f angezogen, so verringert sich der Abstand der beiden Klemmbügelabschnitte 92f und 94f, was die Klemmwirkung des Klemmbügels 80f auf das Abdeckband 24f und die Führungsschiene 12f verstärkt. Entsprechend kann dieser Klemmeingriff durch Lösen der Spannschraube 82f wieder gelockert werden.

Zur Ermöglichung dieser Funktion ist der Klemmbügel 80f vorzugsweise aus einem elastischen Material, beispielsweise Metall oder Kunststoff, gebildet. Zur Erhöhung der Klemmwirkung kann eine der Spannschraube 82f analoge Schraube auch im Bereich des freien Endes 86f des Klemmbügels 80f vorgesehen sein.

In Fig. 10 ist eine weitere Ausführungsform einer erfindungsgemäßen Linearführungsanordnung dargestellt, deren Aufbau und Funktion im Wesentlichen der Ausführungsform gemäß Fig. 9 entspricht. In Fig. 10 sind daher analoge Teile mit gleichen Bezugszeichen versehen wie in Fig. 9, jedoch mit dem Kleinbuchstaben "g" anstelle von "f". Des Weiteren wird die Ausführungsform gemäß Fig. 10 nur insoweit beschrieben werden, als sie sich von der Ausführungsform gemäß Fig. 9 unterscheidet, auf deren Beschreibung hiermit ansonsten ausdrücklich verwiesen sei.

Der einzige Unterschied der Linearführungsanordnung 10g gemäß Fig. 10 verglichen mit der Linearführungsanordnung 10f gemäß Fig. 9 besteht darin, dass die die Bandsicherungseinheit 32g bildende Klemmbügeleinheit ein erstes Klemmbügelteil 80g umfasst, in deren freien Endabschnitt 92g die eine Durchgangsöffnung 100g für die Spannschraube 82g gebildet ist, sowie ein zweites Klemmbügelteil 104g, das den Abschnitt 94g mit der Gewindebohrung 98g bildet, in welche der Gewindeschaft 96g der Spannschraube 82g eingeschraubt ist. Hinsichtlich der Klemmwirkung des Mittelabschnitts 88g bzw. der Ausbuchtung 90g gegen das Abdeckband 24g und die Führungsschiene 12g entspricht die Ausführungsform gemäß Fig. 10 jener gemäß Fig. 9.

In Fig. 11 ist eine weitere Ausführungsform einer erfindungsgemäßen Linearführungsanordnung dargestellt, deren Aufbau und Funktion im Wesentlichen der Ausführungsform gemäß Fig. 9 entspricht. In Fig. 11 sind daher analoge Teile mit gleichen Bezugszeichen versehen wie in Fig. 9, jedoch mit dem Kleinbuchstaben "h" anstelle von "f". Des Weiteren wird die Ausführungsform gemäß Fig. 11 nur insoweit beschrieben werden, als sie sich von den Ausführungsformen gemäß Fig. 9 und 10 unterscheidet, auf deren Beschreibung hiermit ansonsten ausdrücklich verwiesen sei.

Auch bei der Linearführungsanordnung 10h gemäß Fig. 11 umfasst die die Bandsicherungseinheit 32h bildende Klemmbügeleinheit ein erstes Klemmbügelteil 80h und ein zweites Klemmbügelteil 104h, die mit ihren freien Enden 84h und 86h in seitliche Längsnuten 48h der Führungsschiene 12h eingreifen. Das zweite Klemmbügelteil 104h stützt sich jedoch mit einer V-förmigen Ausbuchtung 106h im Mittelabschnitt 88h der Klemmbügeleinheit 32h an der Sicke 90h des ersten Klemmbügelteils 80h ab, mit der dieses das Abdeckband 24h gegen die Führungsschiene 12h andrückt.

Im Unterschied zur Ausführungsform gemäß Fig. 10 ist bei der Linearführungsanordnung 10h der Gewindedurchgang 98h für die Spannschraube 82h an dem ersten Bügelteil 80h ausgebildet, während die Durchgangsöffnung 100h an dem zweiten Bügelteil 104h ausgebildet ist. Gleichwohl kann durch Anziehen der Spannschraube 82h der Abstand der beiden Bügelteile 80h und 104h in Höhenrichtung H verringert werden, was die Klemmwirkung der Klemmbügeleinheit 32h gegen das Abdeckband 24h und die Führungsschiene 12h verstärkt.

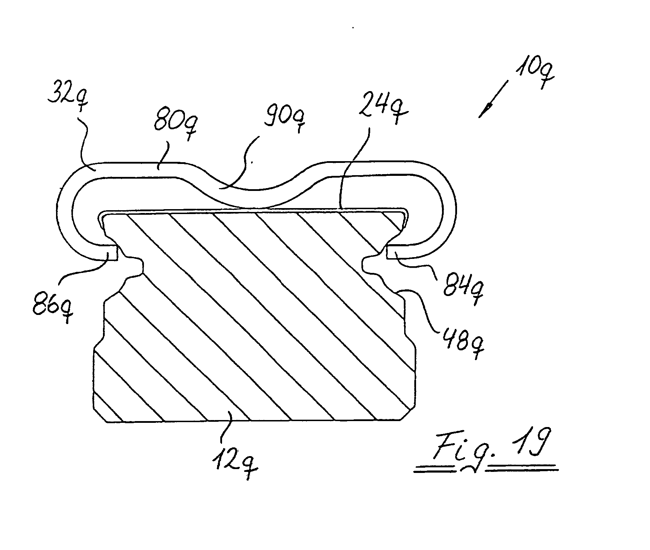

Die Linearführungsanordnung 10i gemäß Fig. 12 unterscheidet sich von der Linearführungsanordnung 10h gemäß Fig. 11 lediglich dadurch, dass das zweite Klemmbügelteil 104i keine der Ausbuchtung 106h entsprechende Ausbuchtung aufweist, sondern sich am freien Ende 108i des ersten Klemmbügelteils 80i abstützt. Hinsichtlich des Eingriffs der freien Enden 84i und 86i der Klemmbügelteile 80i und 104i in die Längsnuten 48i der Führungsschiene 12i und der Klemmwirkung der im Mittelabschnitt 88i vorgesehenen Ausbuchtung 90i des Bügelteils 80i gegen das Abdeckband 24i und die Führungsschiene 12i unter Vermittelung der Spannschraube 82i sei auf die Erläuterungen zu den vorstehenden Ausführungsformen verwiesen.

In Fig. 13 ist eine weitere Ausführungsform einer erfindungsgemäßen Linearführungsanordnung dargestellt, deren Aufbau und Funktion im Wesentlichen der Ausführungsform gemäß Fig. 9 entspricht. In Fig. 13 sind daher analoge Teile mit gleichen Bezugszeichen versehen wie in Fig. 9, jedoch mit dem Kleinbuchstaben "k" anstelle von "f". Des Weiteren wird die Ausführungsform gemäß Fig. 13 nur insoweit beschrieben werden, als sie sich von den Ausführungsformen gemäß Fig. 9 bis 12 unterscheidet, auf deren Beschreibung hiermit ansonsten ausdrücklich verwiesen sei.

Bei der Linearführungsanordnung 10k gemäß Fig. 13 umfasst die Klemmbügeleinheit 32k wiederum einen einzigen Klemmbügel 80k, der mit seinem freien Ende 86k in eine Längsnut 48k der Führungsschiene 12k eingreift. Im Bereich des anderen freien Endes 84k ist die Spannschraube 82k in eine Gewindebohrung 98k des Klemmbügels 80k eingeschraubt. Der Schaft der Spannschraube 82k ist mit einer sich verjüngenden, vorzugsweise sich konisch verjüngenden Spitze 110k ausgebildet und greift mit dieser Spitze 110k in die andere Längsnut 48k der Führungsschiene 12k ein, wobei sie sich mit dieser konischen Spitze 110k an einer Kante 112k dieser Längsnut abstützt.

Wird nun die Spannschraube 82k weiter in die Längsnut 48k eingeschraubt, so bewegt sich dabei die Schraubenachse A der Spannschraube 82k in der Darstellung gemäß Fig. 13 nach unten und nimmt dabei das freie Ende 84k des Klemmbügels 80k mit. Infolge dieser Bewegung wird die Klemmwirkung der Ausbuchtung 90k des Klemmbügels 80k gegen das Abdeckband 24k und die Führungsschiene 12k verstärkt.

Die Linearführungsanordnung 10l gemäß Fig. 14 unterscheidet sich von der Linearführungsanordnung 10k gemäß Fig. 13 lediglich dadurch, dass sie auf eine speziell ausgebildete Spannschraube mit einer konischen Spitze verzichtet und die gleiche Wirkung mit einer herkömmlichen Spannschraube 82l verwirklicht, deren Schraubenachse A die von dem Abdeckband 24l aufgespannte Ebene E unter einem von 90° verschiedenen Winkel schneidet. Auch die Spannschraube 82l ist in eine Gewindebohrung 98l eingeschraubt, die im Bereich des freien Endes 84l des Klemmbügels 80l der Bandsicherungseinheit 32l ausgebildet ist, und stützt sich mit ihrer herkömmlich ausgebildeten Spitze 110l an einer Kante 112l einer Längsnut 48l der Führungsschiene 12l ab. Als Widerlager für den Klemmeingriff der Ausbuchtung 90l mit dem Abdeckband 24l und der Führungsschiene 12l dient das andere freie Ende 86l des Klemmbügels 80l, das in die andere Längsnut 48l der Führungsschiene 12l eingreift.

Bei der Linearführungsanordnung 10m gemäß Fig. 15 wird die gleiche Funktion mittels einer als Senkkopfschraube ausgebildeten Spannschraube 82m verwirklicht, deren Senkkopf 114m sich mit seiner verjüngenden, vorzugsweise konisch verjüngenden Außenumfangsfläche an einer Kante 112m der Längsnut 48m der Führungsschiene 12m abstützt. Hinsichtlich der sonstigen Ausbildung der Bandsicherungseinheit 32m, insbesondere was die freien Enden 84m und 86m und die Klemmwirkung der Ausbuchtung 90m gegen das Abdeckband 24m und die Führungsschiene 12m anbelangt, sei auf die vorstehenden Ausführungsformen, insbesondere die Ausführungsformen gemäß Fig. 13 und 14, verwiesen.

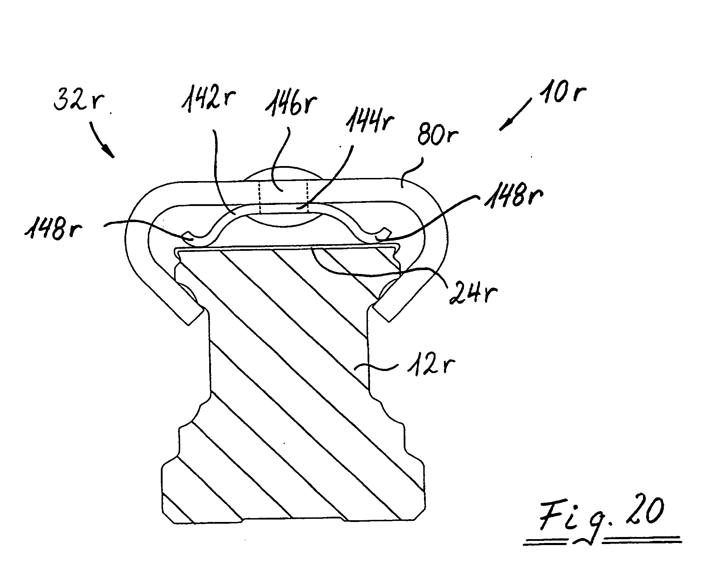

In Fig. 16 ist eine weitere Ausführungsform einer erfindungsgemäßen Linearführungsanordnung dargestellt, deren Aufbau und Funktion im Wesentlichen der Ausführungsform gemäß Fig. 9 entspricht. In Fig. 16 sind daher analoge Teile mit gleichen Bezugszeichen versehen wie in Fig. 9, jedoch mit dem Kleinbuchstaben "n" anstelle von "f". Des Weiteren wird die Ausführungsform gemäß Fig. 16 nur insoweit beschrieben werden, als sie sich von den Ausführungsformen gemäß Fig. 9 bis 15 unterscheidet, auf deren Beschreibung hiermit ansonsten ausdrücklich verwiesen sei.

Bei der Linearführungsanordnung 10n ist der Klemmbügel 80n der Bandsicherungseinheit 32n zur Erzielung der Klemmwirkung gegen das Abdeckband 24n und die Führungsschiene 12n nicht mit einer Ausbuchtung 90 versehen. Vielmehr ist in zwei zur Längsrichtung L im Wesentlichen orthogonal verlaufenden Endplatten 120n des Klemmbügels 80n die Achse 122n eines Exzenters 124n drehbar gelagert, der mit seiner Außenumfangsfläche das Abdeckband 24n gegen die Führungsschiene 12n andrückt. Wie bereits bei anderen vorstehend beschriebenen Ausführungsformen dienen die in die Längsnuten 48n der Führungsschiene 12n eingreifenden Längsenden 84n und 86n dabei als Widerlager.

Bei der Linearführungsanordnung 10o gemäß Fig. 17 ist anstelle des Exzenters ein Schiebekeil 126o vorgesehen, der zwischen dem Abdeckband 24o und dem Klemmbügel 80o der Bandsicherungseinheit 32o angeordnet ist und mittels einer Schraube 128o in Querrichtung Q verlagerbar ist. Da der an das freie Ende 84o des Klemmbügels 80o angrenzende Abschnitt 130o in Richtung H betrachtet eine geringere Höhe aufweist als der entsprechende an das freie Ende 86o angrenzende Abschnitt 132o des Klemmbügels 80o, verstärkt sich die Klemmwirkung des Schiebekeils 126o gegen das Abdeckband 24o und die Führungsschiene 12o umso mehr, je weiter der Schiebekeil 126o durch die Schraube 128o in der Darstellung gemäß Fig. 17 nach rechts bewegt wird. Wiederum stützen sich die freien Enden 84o und 86o des Klemmbügels 80o in den Längsnuten 48o der Führungsschiene 12o als Widerlager ab.

Bei der Linearführungsanordnung 10p gemäß Fig. 18 wird das freie Ende 84p des Klemmbügels 80p der Bandsicherungseinheit 32p unter dem Einfluss einer im Bereich des anderen freien Endes 86p angeordneten Spannschraube 82p in Eingriff mit einer Kante 112p einer Längsnut 48p der Führungsschiene 12p gezogen. Die Spannschraube 82p stützt sich dabei seitlich an dem umgeknickten Randabschnitt 140p des Abdeckbands 24p ab und drückt dieses gegen die Führungsschiene 12p an. Auch durch dieses seitliche Andrücken kann eine Bewegung des Abdeckbandes 24p relativ zur Führungsschiene 12p in Längsrichtung L kraftschlüssig verhindert werden. Die Ausführungsform gemäß Fig. 18 belegt, dass grundsätzlich auch auf eine der Ausbuchtung 90 entsprechende Ausbuchtung verzichtet werden kann.

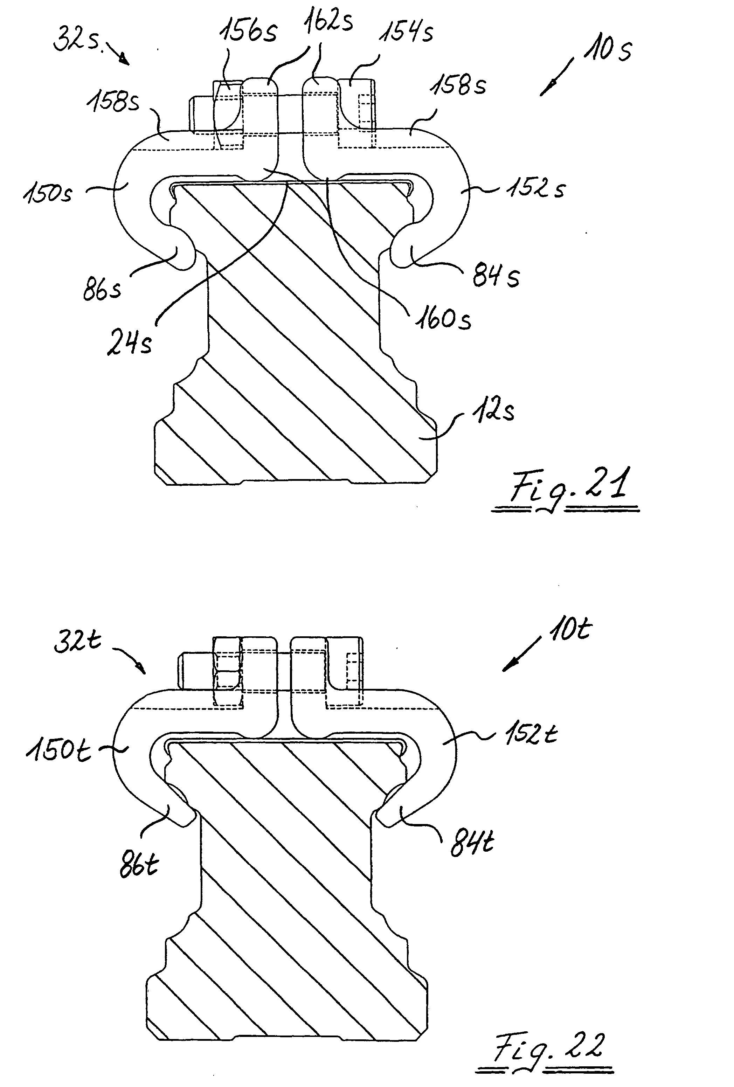

Anhand der in Fig. 19 dargestellten Ausführungsform soll schließlich gezeigt werden, dass bei der Linearführungsanordnung 10q auch auf das Vorsehen einer Spannschraube 82 verzichtet werden kann, wenn man die Eigenelastizität des Klemmbügels 80q der Bandsicherungseinheit 32q ausnutzt, um die Ausbuchtung 90q unter Einsatz des Eingriffs der freien Enden 84q und 86q des Klemmbügels 90q in die Längsnuten 48q der Führungsschiene 12q als Widerlager gegen das Abdeckband 24q und die Führungsschiene 12q anzudrücken.

Nachzutragen ist noch, dass bei der ein- oder mehrteilig ausgeführten Klemmbügeleinheit der Klemmbügel ein von diesem gesondert ausgebildetes, mit diesem aber vorzugsweise verbundenes Federelement umfassen kann, welches das Abdeckband gegen die Führungsschiene andrückt. Dabei kann das Federelement beispielsweise als Bügelfeder. ausgebildet sein, die in ihrem Mittelabschnitt mit dem Klemmbügel verbunden ist und mit ihren beiden freien Enden das Abdeckband gegen die Führungsschiene andrückt.

Nachzutragen ist ferner, dass die Spannvorrichtung gemäß einer weiteren Ausführungsvariante eine Vorrichtung umfassen kann zur Veränderung des Querabstands zwischen zwei Klemmbügelteilen, von denen jedes eines der freien Enden der Klemmbügeleinheit aufweist. Unter"Querabstand" wird dabei der Abstand der beiden Klemmbügelteile in einer sich im Wesentlichen parallel zur Abdeckbandebene und orthogonal zur Längsrichtung der Führungsschiene erstreckenden Richtung verstanden. Dabei muss die Stellrichtung der Spannvorrichtung nicht notwendigerweise ausschließlich in dieser Querrichtung verlaufen. Vielmehr genügt es, wenn diese Stellrichtung eine Bewegungskomponente in Querrichtung aufweist.

In Weiterbildung dieser Ausführungsvariante können die beiden Klemmbügelteile im Wesentlichen identisch ausgebildet sein, was mehrere Vorteile hat. Zum einen reduzieren sich dadurch die Herstellungskosten, da nur noch eine einzige Art von Klemmbügelteil gefertigt werden muss, und dies mit entsprechend höherer Stückzahl. Zum anderen liegen sich die beiden Klemmbügelteile einander im Bereich des Mittelabschnitts des Abdeckbands oberhalb der Führungsschiene gegenüber. Hierdurch kann auch die vorzugsweise von einer Spannschraube gebildete Spannvorrichtung in dem Bauraum oberhalb der Führungsschiene aufgenommen sein und braucht nicht seitlich über die Führungsschiene hinauszustehen.

Jedes der Klemmbügelteile weist eines der freien Enden der Klemmbügeleinheit auf und greift mit diesem freien Ende seitlich an der Führungsschiene an. Darüber hinaus kann wenigstens eines der beiden Klemmbügelteile im Bereich des Mittelabschnitts des Abdeckbands jeweils eine Wulst oder/und Sicke aufweisen, die an dem Abdeckband anliegt. Mit seinem restlichen Körper verläuft das Klemmbügelteil in geringem Abstand vom Abdeckband. Wird nun die Spannvorrichtung angezogen, d.h. werden die beiden einander im Mittelabschnitt des Abdeckbands gegenüber liegenden Spannbacken der Klemmbügelteile aufeinander zubewegt, so wird das Klemmbügelteil unter der resultierenden Hebelwirkung mit der Wulst bzw. Sicke fester gegen das Abdeckband angedrückt. Vorteilhaft kann es in diesem Zusammenhang ferner sein, wenn die Gestalt des mit der Führungsschiene in Eingriff stehenden freien Endes wenigstens eines der Klemmbügelteile in Anpassung an das Oberflächenprofil der Führungsschiene ausgebildet ist. Diese Anpassung der Gestalt der freien Enden der Klemmbügeleinheit kann jedoch auch in Verbindung mit allen anderen Ausführungsarten kombiniert werden.

Die Ausführungsformen gemäß den vorstehend angesprochenen Nachträgen werden im Folgenden anhand der Fig. 20 - 22 näher erläutert werden. Es stellt dar:
- Fig. 20 - 22: Ausführungsvarianten von Linearführungsanordnungen mit Klemmbügel-Bandsicherungseinheit.

Bei der Linearführungsanordnung 10r gemäß Fig. 20 ist die Bandsicherungseinheit 32r von einer Klemmbügeleinheit gebildet, die einen Klemmbügel 80r und eine Bügelfeder 142r umfasst. Die Bügelfeder 142r ist in ihrem Mittelabschnitt 144r mittels einer Niete 146r am Klemmbügel 80r befestigt. Mit ihren beiden freien Enden 148r drückt sie das Abdeckband 24r gegen die Führungsschiene 12r an. Bezüglich weiterer Details kann auf die Beschreibung der Ausführungsbeispiele gemäß Figuren 9 - 19 Bezug genommen werden.

Bei der in Fig. 21 dargestellten Linearführungsanordnung 10s ist die Bandsicherungseinheit 32s von einer Klemmbügeleinheit gebildet, die zwei Klemmbügelteile 150s und 152s umfasst, welche im Wesentlichen identisch ausgebildet sind. Im Bereich des Mittelabschnitts des Abdeckbands 24s liegen die beiden Klemmbügelteile 150s, 152s einander mit geringem Abstand gegenüber und sind mittels einer Spannschraube 154s und einer zugeordneten Schraubmutter 156s miteinander verbunden.

Die Spannschraube 154s durchsetzt hierzu zwei Durchgangslöcher in den Klemmbügelteilen 150s und 152s.

Ein Verdrehen der Mutter 156s beim Festziehen der Schraube 154s kann durch eine entsprechende prismatische Gestaltung einer Führungsrinne 158s erreicht werden. Auch das Klemmbügelteil 152s ist mit einer prismatischen Führung 158s ausgebildet. Ein Verdrehen der Schraube 154s in dieser prismatischen Führung 158s kann durch einen Rundkopf der Schraube 154s mit entsprechend geringem Durchmesser ermöglicht werden.

Jedes der beiden Klemmbügelteile 150s, 152s verfügt im Bereich des Spannabschnitts 162s über eine Ausbuchtung 160s, mit der es beim Anziehen der Spannschraube 154s aufgrund der Hebelwirkung der Klemmbügelteile 150s, 152s das Abdeckband 24s gegen die Führungsschiene 12s andrückt.

Festzuhalten ist ferner, dass die freien Enden 84s und 86s der Klemmbügelteile 150s, 152s in Anpassung an das Oberflächenprofil der Führungsschiene 12s ausgebildet sind. Eine Ausgestaltungsvariante, die bei sämtlichen vorstehend beschriebenen Klemmbügel-Ausführungsvarianten der Bandsicherungseinheit gemäß Figuren 9 - 19 eingesetzt werden kann.

Bei der Linearführungsanordnung 10t gemäß Fig. 22 wurde im Vergleich mit der Linearführungsanordnung 10s gemäß Fig. 21 lediglich auf diese Gestaltungsvariante der freien Enden 84t und 86t der Klemmbügelteile 150t, 152t der Bandsicherungseinheit 32t verzichtet. Ansonsten entspricht die Ausführungsform gemäß Fig. 22 in Aufbau und Funktion jener der Fig. 21, auf deren Beschreibung hiermit ansonsten ausdrücklich verwiesen sei.

## Patentansprüche

1. Linearführungsanordnung (10a-10e) mit einer länglichen Führungsschiene (12a-12e) und einem in Längsrichtung (L) der Führungsschiene (12a-12e) auf dieser verfahrbaren Laufwagen (14a),
wobei eine dem Laufwagen (14a) zugewandte Oberfläche der Führungsschiene (12a-12e) mittels eines Abdeckbandes (24a-24e) abgedeckt ist,
wobei ferner im Bereich der beiden Längsenden (30a) der Führungsschiene (12a-12e) jeweils eine Bandsicherungseinheit (32a-32e) angeordnet ist, und
wobei die beiden Bandsicherungseinheiten (32a-32e) gemeinsam das Abdeckband (24a-24e) zumindest hinsichtlich dessen Verlagerung in Längsrichtung (L) der Führungsschiene (12a-12e) an der Führungsschiene (12a-12e) sichern,
wobei wenigstens eine Bandsicherungseinheit (32a-32e) mit dem Abdeckband (24a-24e) in formschlüssiger Mitnahmeverbindung steht,
**dadurch gekennzeichnet, dass** jede der Bandsicherungseinheiten (24a-24e) an der Führungsschiene (12a-12e) kraftschlüssig gehalten ist, wobei jede der Bandsicherungseinheiten (32a-32e) eine auf die jeweils andere Bandsicherungseinheit (32a-32e) zu gerichtete Bewegung des Abdeckbandes (24a-24e) retativ zu der Führungsschiene (12a-12e) zumindest erschwert.

2. Linearführungsanordnung nach Anspruch 1,
**dadurch gekennzeichnet, dass** die Bandsicherungseinheit (32a-32e) wenigstens einen Klemmansatz (46a-46e) aufweist, der vorzugsweise seitlich an der Führungsschiene (12a-12e) angreift.

3. Linearführungsanordnung (10a, 10c-10e) mit einer länglichen Führungsschiene (12a, 12c-12e) und einem in Längsrichtung (L) der Führungsschiene (12a, 12c-12e) auf dieser verfahrbaren Laufwagen (14a),
wobei eine dem Laufwagen (14a) zugewandte Oberfläche der Führungsschiene (12a, 12c-12e) mittels eines Abdeckbandes (24a, 24c-24e) abgedeckt ist,
wobei ferner im Bereich der beiden Längsenden (30a) der Führungsschiene (12a, 12c-12e) jeweils eine Bandsicherungseinheit (32a, 32c-32e) angeordnet ist, und
wobei die beiden Bandsicherungseinheiten (32a, 32c-32e) gemeinsam das Abdeckband (24a, 24c-24e) zumindest hinsichtlich dessen Verlagerung in Längsrichtung (L) der Führungsschiene (12a, 12c-12e) an der Führungsschiene (12a, 12c-12e) sichern,
wobei wenigstens eine Bandsicherungseinheit (32a-32e) mit dem Abdeckband (24a-24e) in formschlüssiger Mitnahmeverbindung steht,
**dadurch gekennzeichnet, dass** jede der Bandsicherungseinheiten (32a, 32c-32e) durch schraubverbindungsfreien, formschlüssigen Eingriff einer Anschlagfläche der Bandsicherungseinheit (32a, 32c-32e) mit einer Gegenanschlagfläche der Führungsschiene (12a, 12c-12e) eine auf die jeweils andere Bandsicherungseinheit (32a, 32c-32e) zu gerichtete Bewegung des Abdeckbandes (24a-24e) relativ zu der Führungsschiene (12a, 12c-12e) verhindert.

4. Linearführungsanordnung nach einem der Ansprüche 1 bis 3,
**dadurch gekennzeichnet, dass** an einem (32a-32e) der Teile, Bandsicherungseinheit oder Abdeckband wenigstens ein Ansatz (34a-34e) vorgesehen ist, der in eine zugehörige, am jeweils anderen Teil (24a-24e), Abdeckband oder Bandsicherungseinheit, vorgesehene Ausnehmung (36a-36e) eingreift.

5. Linearführungsanordnung nach Anspruch 4,
**dadurch gekennzeichnet, dass** das Abdeckband (24a, 24b, 24d, 24e), vorzugsweise annähernd in seiner Quermitte, wenigstens eine Ausnehmung (36a, 36b, 36d, 36e) aufweist, in welche ein Ansatz (34a, 34b, 34d, 34e) der Bandsicherungseinheit (32a, 32b, 32d, 32e) in einer zur Bandebene (E) im Wesentlichen orthogonal verlaufenden Richtung eingreift.

6. Linearführungsanordnung nach Anspruch 4,
**dadurch gekennzeichnet, dass** das Abdeckband (24c) wenigstens eine seitliche Ausnehmung (36c) aufweist, in welche ein Ansatz (34c) der Bandsicherungseinheit (32c) im Wesentlichen in Querrichtung (Q) des Abdeckbandes (24c) eingreift.

7. Linearführungsanordnung nach Anspruch 5 oder 6,
**dadurch gekennzeichnet, dass** der Ansatz (34c) mit der Bandsicherungseinheit (24c) über einen flexiblen Steg (52c) verbunden ist.

8. Linearführungsanordnung nach einem der Ansprüche 5 bis 7,
**dadurch gekennzeichnet, dass** der Ansatz (34a-34c) an der Bandsicherungseinheit (24a-24c) einstückig angeformt ist.

9. Linearführungsanordnung nach einem der Ansprüche 5 bis 7,
**dadurch gekennzeichnet, dass** der Ansatz (34d, 34e) ein von einem Basisteil der Bandsicherungseinheit (32d, 32e) gesondert ausgebildetes Element ist.

10. Linearführungsanordnung nach einem der Ansprüche 1, 2 oder 4 bis 9,
**dadurch gekennzeichnet, dass** die Bandsicherungseinheit (32a, 32c-32e) an der Führungsschiene (12a, 12c-12e) zumindest bezüglich einer auf die jeweils andere Bandsicherungseinheit (32a, 32c-32e) zu gerichteten Bewegung formschlüssig gehalten ist.

11. Linearführungsanordnung nach Anspruch 3 oder 10,
**dadurch gekennzeichnet, dass** die Bandsicherungseinheit (32a, 32c-32e) einen sich im Wesentlichen orthogonal zur Längsrichtung (L) der Führungsschiene (12a, 12d, 12e) erstreckenden Flansch (38a, 38d, 38e) aufweist, der im montierten Zustand der Linearführungsanordnung (10a, 10c-10e) an einer Stirnfläche (40a, 40d) der Führungsschiene (12a, 12c-12e) anliegt.

12. Linearführungsanordnung nach einem der Ansprüche 1 bis 11,
**dadurch gekennzeichnet, dass** das Abdeckband (24d, 24e) eine größere Länge aufweist als die Führungsschiene (12d, 12e) und dass das Abdeckband (24d, 24e) mit der Bandsicherungseinheit (32d, 32e) in einem über die Führungsschiene (12d, 12e) hinausragenden Abschnitt formschlüssig verbunden ist.

13. Linearführungsanordnung nach Anspruch 12,
**dadurch gekennzeichnet, dass** die Bandsicherungseinheit (32d, 32e) eine Vertiefung, vorzugsweise einen Durchgang (62d, 62e), aufweist, in welcher der über die Führungsschiene (12d, 12e) hinausragenden Abschnitt des Abdeckbandes (24d, 24e) aufnehmbar ist.

14. Linearführungsanordnung nach Anspruch 13,
**dadurch gekennzeichnet, dass** die Bandsicherungseinheit (32e) aus wenigstens zwei Teilen (66e, 68e) gebildet ist, wobei der eine Teil (66e) eine obere Begrenzungsfläche und der andere Teil (68e) eine untere Begrenzungsfläche der Vertiefung (62e) aufweist, und wobei vorzugsweise beide seitlichen Begrenzungsflächen der Vertiefung (62e) an ein und demselben Teil (66e) ausgebildet sind.

15. Linearführungsanordnung nach Anspruch 14,
**dadurch gekennzeichnet, dass** die wenigstens zwei Teile (66e, 68e) miteinander verrastbar sind (70e).

16. Linearführungsanordnung nach einem der Ansprüche 1 bis 15,
**dadurch gekennzeichnet, dass** die Bandsicherungseinheit (32a-32e) zumindest teilweise als Kunststoff- oder Metall-Spritzgussteil gefertigt ist.

17. Linearführungsanordnung (10f-10q) mit einer länglichen Führungsschiene (12f-12q) und einem in Längsrichtung (L) der Führungsschiene (12f-12q) auf dieser verfahrbaren Laufwagen (14f),
wobei eine dem Laufwagen (14f) zugewandte Oberfläche der Führungsschiene (12f-12q) mittels eines Abdeckbandes (24f-24q) abgedeckt ist, und
wobei ferner im Bereich wenigstens eines der beiden Längsenden der Führungsschiene (12f-12q) eine Bandsicherungseinheit (32f-32q) angeordnet ist,
**dadurch gekennzeichnet, dass** die Bandsicherungseinheit (32f-32q) sowohl mit dem Abdeckband (24f-24q) als auch mit der Führungsschiene (12f-12q) kraftschlüssig in Eingriff steht.

18. Linearführungsanordnung nach Anspruch 17,
**dadurch gekennzeichnet, dass** die Bandsicherungseinheit als Klemmbügeleinheit (32f-32q) ausgebildet ist.

19. Linearführungsanordnung nach Anspruch 18,
**dadurch gekennzeichnet, dass** die Klemmbügeleinheit (32f-32q) zwei freie Enden (84f-84i, 82k-82m, 84n-84q, 86f-86o, 82p, 86q) aufweist, die seitlich an der Führungsschiene (12f-12q) angreifen, vorzugsweise in eine Längsnut (48f-48q) der Führungsschiene (12f-12q) eingreifen.

20. Linearführungsanordnung nach Anspruch 18 oder 19,
**dadurch gekennzeichnet, dass** die Klemmbügeleinheit (32f-32o, 32q) in einem zwischen ihren beiden freien Enden angeordneten Mittelabschnitt (88f-88h) das Abdeckband (24f-24o, 24q) gegen die Führungsschiene (12f-12o, 12q) andrückt.

21. Linearführungsanordnung nach einem der Ansprüche 18 bis 20,
**dadurch gekennzeichnet, dass** die Klemmbügeleinheit (32f-32q) einen ein- oder mehrteilig ausgeführten Klemmbügel (80f-80q) aufweist, der vorzugsweise aus einem elastischen Material gefertigt ist.

22. Linearführungsanordnung nach Anspruch 21,
**dadurch gekennzeichnet, dass** der Klemmbügel (80f, 80k-80m, 80q) bzw. wenigstens ein Klemmbügelteil (80g-80i) im Bereich des Mittelabschnitts der Klemmbügeleinheit (32f-32m, 32q) mit einer, vorzugsweise in Form einer Sicke gestalteten, Ausbuchtung (90f-90m, 90q) ausgebildet ist.

23. Linearführungsanordnung nach einem der Ansprüche 18 bis 22,
**dadurch gekennzeichnet, dass** die Klemmbügeleinheit (32f-32p) eine Spannvorrichtung (82f-82m, 122n, 128o, 82p) umfasst, mittels derer die Andrückkraft der Klemmbügeleinheit (32f-32p) gegen das Abdeckband (24f-24p) einstellbar ist.

24. Linearführungsanordnung nach Anspruch 23,
**dadurch gekennzeichnet, dass** die Spannvorrichtung (82f) eine Vorrichtung zur Veränderung des Abstands zwischen einem ersten Abschnitt (92f) des Klemmbügels (80f) und einem hierzu vorzugsweise im Wesentlichen parallel verlaufenden, an ein freies Ende (84f) des Klemmbügels (80f) angrenzenden zweiten Abschnitts (94f) des Klemmbügels (80f) umfasst.

25. Linearführungsanordnung nach Anspruch 23,
**dadurch gekennzeichnet, dass** die Spannvorrichtung (82g-82i) eine Vorrichtung zur Veränderung des Abstands zwischen einem ersten Klemmbügelteil (80g-80i) und einem hierzu vorzugsweise im Wesentlichen parallel verlaufenden, an ein freies Ende (84g-84i) des Klemmbügels angrenzenden zweiten Klemmbügelteils (104g-104i) umfasst.

26. Linearführungsanordnung nach Anspruch 25,
**dadurch gekennzeichnet, dass** der Mittelabschnitt (88g-88i) der Klemmbügeleinheit (32g-32i) an dem ersten Klemmbügelteil (80g-80i) vorgesehen ist.

27. Linearführungsanordnung nach Anspruch 25,
**dadurch gekennzeichnet, dass** sich das zweite Klemmbügelteil (104h, 104i) auf einer vom Abdeckband (24h, 24i) abgewandten Seite des ersten Klemmbügelteils (80h, 80i) abstützt.

28. Linearführungsanordnung nach Anspruch 27,
**dadurch gekennzeichnet, dass** sich das zweite Klemmbügelteil (104h) im Mittelabschnitt (88h) der Klemmbügeleinheit (32h) am ersten Klemmbügelteil (80h) abstützt.

29. Linearführungsanordnung nach Anspruch 27,
**dadurch gekennzeichnet, dass** sich das zweite Klemmbügelteil (104i) an einem Abschnitt (108i) des ersten Klemmbügelteils (80i) abstützt, der sich auf der dem freien Ende (86i) des ersten Klemmbügelteils (80i) gegenüberliegenden Seite an den Mittelabschnitt (88i) anschließt.

30. Linearführungsanordnung nach Anspruch 23,
**dadurch gekennzeichnet, dass** die Spannvorrichtung (82k-82m) ein Spannelement umfasst, das eines der freien Enden der Klemmbügeleinheit (32k-32m) bildet.

31. Linearführungsanordnung nach Anspruch 30,
**dadurch gekennzeichnet, dass** das Spannelement eine Spannschraube (82k-82m) umfasst, die mit dem Klemmbügel (80l-80m) bzw. wenigstens einem Klemmbügelteil in Schraubeingriff steht.

32. Linearführungsanordnung nach Anspruch 31,
**dadurch gekennzeichnet, dass** die Spannschraube (82m) einen sich, vorzugsweise konisch, erweiternden Kopf (114m) und eine vorzugsweise orthogonal zur Abdeckbandebene (E) verlaufende Schraubenachse (A) aufweist, welche mit der sich verjüngenden Kopfoberfläche in eine seitliche Längsnut (48m) der Führungsschiene (12m) eingreift.

33. Linearführungsanordnung nach Anspruch 31,
**dadurch gekennzeichnet, dass** die Spannschraube (82k) eine sich, vorzugsweise konisch, verjüngende Spitze (110k) und eine vorzugsweise im Wesentlichen in Querrichtung (Q) des Abdeckbandes (24k) verlaufender Schraubenachse (A) aufweist, welche mit der sich verjüngenden Spitzenoberfläche (110k) an einer Kante (112k) einer seitlichen Längsnut (48k) der Führungsschiene (12k) anliegt.

34. Linearführungsanordnung nach Anspruch 31,
**dadurch gekennzeichnet, dass** die Spannschraube (82l) an der Führungsschiene (12l) seitlich angreift, wobei ihre Schraubenachse (A) zumindest teilweise in einer zur Abdeckbandebene (E) im Wesentlichen orthogonalen Richtung verläuft.

35. Linearführungsanordnung nach Anspruch 23,
**dadurch gekennzeichnet, dass** die Spannvorrichtung (122n) einen Exzenter (124n) aufweist, der an der Klemmbügleleinheit (32n) in deren Mittelabschnitt um eine Achse verdrehbar gelagert und mit seiner Umfangsfläche gegen das Abdeckband (24n) andrückbar ist.

36. Linearführungsanordnung nach Anspruch 23,
**dadurch gekennzeichnet, dass** der Klemmbügel (80o) im Bereich (132o) eines Seitenrandes des Abdeckbandes (24o) einen größeren Orthogonalabstand von diesem aufweist als im Bereich (130o) des jeweils anderen Seitenrands und dass die Spannvorrichtung einen in Querrichtung (Q) des Abdeckbandes (24o) verlagerbaren Schiebekeil (126o) umfasst.

37. Linearführungsanordnung nach einem der Ansprüche 1 bis 36,
**dadurch gekennzeichnet, dass** das Abdeckband (24a-24q) mit seinen Seitenrändern auf die Führungsschiene (12a-12q) aufgerastet ist.

38. Linearführungsanordnung nach den Ansprüchen 23 und 37,
**dadurch gekennzeichnet, dass** die Spannvorrichtung (82p), beispielsweise die Spannschraube, seitlich gegen einen der Seitenränder (140p) des Abdeckbandes (24p) andrückt.

39. Linearführungsanordnung nach Anspruch 21,
**dadurch gekennzeichnet, dass** der Klemmbügel (80r) ein von diesem gesondert ausgebildetes, mit diesem aber vorzugsweise verbundenes Federelement (142r) umfasst, das das Abdeckband (24r) gegen die Führungsschiene (1 2r) andrückt.

40. Linearführungsanordnung nach Anspruch 39,
**dadurch gekennzeichnet, dass** das Federelement (142r) als Bügelfeder ausgebildet ist, die in ihrem Mittelabschnitt (144r) mit dem Klemmbügel (80r) verbunden ist und mit ihren beiden freien Enden (148r) das Abdeckband (24r) gegen die Führungsschiene (12r) andrückt.

41. Linearführungsanordnung nach Anspruch 23,
**dadurch gekennzeichnet, dass** die Spannvorrichtung eine Vorrichtung (154s/156s) umfasst zur Veränderung des Querabstands zwischen zwei Klemmbügelteilen (150s, 152s), von denen jedes eines der freien Enden (84s, 86s) der Klemmbügeleinheit (32s) aufweist.

42. Linearführungsanordnung nach Anspruch 41,
**dadurch gekennzeichnet, dass** die beiden Klemmbügelteile (150s, 152s) im Wesentlichen identisch ausgebildet sind.

43. Linearführungsanordnung nach Anspruch 41 oder 42,
**dadurch gekennzeichnet, dass** wenigstens eines der beiden Klemmbügelteile (150s, 152s) im Bereich des Mittelabschnitts des Abdeckbands (24s) jeweils eine Wulst (160s) oder/und eine Sicke aufweist, die an dem Abdeckband (24s) anliegt.

44. Linearführungsanordnung nach einem der Ansprüche 41 bis 43,
**dadurch gekennzeichnet, dass** die Gestalt des mit der Führungsschiene (12s) in Eingriff stehenden freien Endes (84s, 86s) wenigstens eines der Klemmbügelteile (150s, 152s) in Anpassung an das Oberflächenprofil der Führungsschiene (12s) ausgebildet ist.

## Claims

1. Linear guide arrangement (10a-10e), comprising an elongated guide rail (12a-12e) and a guide carriage (14a) moveable thereon in the lengthwise direction (L) of the guide rail (12a-12e), a surface of the guide rail (12a-12e) facing the guide carriage (14a) being covered by a cover strip (24a-24e), a respective strip securing unit (32a-32e) being arranged in the region of the two longitudinal ends (30a) of the guide rail (12a-12e), the two strip securing units (32a-32e) jointly securing the cover strip (24a-24e) to the guide rail (12a-12e) at least with respect to the displacement thereof in the lengthwise direction (L) of the guide rail (12a-12e), at least one strip securing unit (32a-32e) being in interlocking entraining connection with the cover strip (24a-24e), **characterised in that** each of the strip securing units (24a-24e) is secured non-positively on the guide rail (12a-12e), each of the strip securing units (32a-32e) at least impeding movement of the cover strip (24a-24e) relative to the guide rail (12a-12e) directed toward the respective other strip securing unit (32a-32e).

2. Linear guide arrangement according to claim 1, **characterised in that** the strip securing unit (32a-32e) has at least one fixing projection (46a-46e) preferably acting laterally on the guide rail (12a-12e).

3. Linear guide arrangement (10a, 10c-10e), comprising an elongated guide rail (12a, 12c-12e) and a guide carriage (14a) moveable thereon in the lengthwise direction (L) of the guide rail (12a, 12c-12e), a surface of the guide rail (12a, 12c-12e) facing the guide carriage (14a) being covered by a cover strip (24a, 24c-24e), a respective strip securing unit (32a, 32c-32e) being arranged in the region of the two longitudinal ends (30a) of the guide rail (12a, 12c-12e) , the two strip securing units (32a, 32c-32e) jointly securing the cover strip (24a, 24c-24e) to the guide rail (12a, 12c-12e) at least with respect to the displacement thereof in the lengthwise direction (L) of the guide rail (12a, 12c-12e), at least one strip securing unit (32a-32e) being in interlocking entraining connection with the cover strip (24a-24e), **characterised in that** by screw connection-free, interlocking engagement of an abutment face of the strip securing unit (32a, 32c-32e) with a counter abutment face of the guide rail (12a, 12c-12e), each of the strip securing units (32a, 32c-32e) prevents a movement of the cover strip (24a-24e) relative to the guide rail (12a, 12c-12e) directed toward the respective other strip securing unit (32a, 32c-32e).

4. Linear guide arrangement according to any of claims 1 to 3, **characterised in that** at least one projection (34a-34e) is provided on one (32a-32e) of the parts, strip securing unit or cover strip and engages in an associated recess (36a-36e) provided on the respective other part (24a-24e), cover strip or strip securing unit.

5. Linear guide arrangement according to claim 4, **characterised in that** the cover strip (24a, 24b, 24d, 24e) has, preferably approximately in its transverse centre, at least one recess (36a, 36b, 36d, 36e), in which a projection (34a, 34b, 34d, 34e) of the strip securing unit (32a, 32b, 32c, 32d, 32e) engages in a direction running substantially orthogonal to the strip plane (E).

6. Linear guide arrangement according to claim 4, **characterised in that** the cover strip (24a) comprises at least one lateral recess (36c) in which a projection (34c) of the strip securing unit (32c) engages substantially in the transverse direction (Q) of the cover strip (24c).

7. Linear guide arrangement according to claim 5 or 6, **characterised in that** the projection (34c) is connected to the strip securing unit (24c) via a flexible web (52c).

8. Linear guide arrangement according to any of claims 5 to 7, **characterised in that** the projection (34a-34c) is formed in one piece with the strip securing unit (24a-24c).

9. Linear guide arrangement according to any of claims 5 to 7, **characterised in that** the projection (34d, 34e) is an element separately made from a base part of the strip securing unit (32d, 32e).

10. Linear guide arrangement according to any of claims 1, 2 or 4 to 9, **characterised in that** the strip securing unit (32a, 32c-32e) is secured with interlocking fit to the guide rail (12a, 12c-12e) at least with respect to a movement directed toward the respective other strip securing unit (32a, 32c-32e).

11. Linear guide arrangement according to claim 3 or 10, **characterised in that** the strip securing unit (32a, 32c-32e) comprises a flange (38a, 38d, 38e) extending substantially orthogonal to the lengthwise direction (L) of the guide rail (12a, 12d, 12e), said flange being adjacent to an end face (40a, 40d) of the guide rail (12a, 12c-12e) in the assembled state of the linear guide arrangement (10a, 10c-10e).

12. Linear guide arrangement according to any of claims 1 to 11, **characterised in that** the cover strip (24d, 24e) has a length greater than that of the guide rail (12d, 12e) and the cover strip (24d, 24e) is connected with interlocking fit to the strip securing unit (32d, 32e) in a section protruding over the guide rail (12d, 12e).

13. Linear guide arrangement according to claim 12, **characterised in that** the strip securing unit (32d, 32e) comprises a cavity, preferably a passage (62d, 62e), in which the section of the cover strip (24d, 24e) projecting over the guide rail (12d, 12e) can be received.

14. Linear guide arrangement according to claim 13, **characterised in that** the strip securing unit (32e) is made of at least two parts (66e, 68e), wherein one part (66e) having an upper terminating face and the other part (68e) having a lower terminating face of the cavity (62e) and the two lateral terminating faces of the cavity (62e) preferably being formed on one and the same part (66e).

15. Linear guide arrangement according to claim 14, **characterised in that** the at least two parts (66e, 68e) can be latched to one another (70e).

16. Linear guide arrangement according to any of claims 1 to 15, **characterised in that** the strip securing unit (32a-32e) is made at least partially as a plastics material or metal injection moulded part.

17. Linear guide arrangement (10f-10q), comprising an elongated guide rail (12f-12q) and a guide carriage (14f) moveable thereon in the lengthwise direction (L) of the guide rail (12f-12q), a surface of the guide rail (12f-12q) facing the guide carriage (14a) being covered by a cover strip (24f-24q), a strip securing unit (32f-32q) also being arranged in the region of at least one of the two longitudinal ends of the guide rail (12f-12q), **characterised in that** the strip securing unit (32f-32q) is non-positively engaged with the cover strip (24f-24q) as well as with the guide rail (12f-12q).

18. Linear guide arrangement according to claim 17, **characterised in that** the strip securing unit is designed as a clamp strap unit (32f-32q).

19. Linear guide arrangement according to claim 18, **characterised in that** the clamp strap unit (32f-32q) has two free ends (84f-84i, 82k-82m, 84n-84q, 86f-86o, 82p, 86q) which act laterally on the guide rail (12f-12q), preferably engaging in a longitudinal groove (48f-48q) of the guide rail (12f-12q).

20. Linear guide arrangement according to claim 18 or 19, **characterised in that** the clamp strap unit (32f-32o, 32q) presses the cover strip (24f-24o, 24q) against the guide rail (12f-12o, 12q) in a middle section (88f-88h) of the clamp strap unit located between its two free ends.

21. Linear guide arrangement according to any of claims 18 to 20, **characterised in that** the clamp strap unit (32f-32q) has a clamp strap (80f-80q) made of one or more parts and that is preferably made of an elastic material.

22. Linear guide arrangement according to claim 21, **characterised in that** the clamp strap (80f, 80k-80m, 80q), or at least one clamp strap part (80g-80i), is formed with a bulge (90f-90m, 90q), preferably configured in the form of a bead, in the region of the middle section of the clamp strap unit (32f-32m, 32q).

23. Linear guide arrangement according to any of claims 18 to 22, **characterised in that** the clamp strap unit (32f-32p) comprises a fixing device (82f-82m, 122n, 128o, 82p) by means of which the pressing force of the clamp strap unit (32f-32p) against the cover strip (24f-24p) can be adjusted.

24. Linear guide arrangement according to claim 23, **characterised in that** the fixing device (82f) comprises a device for changing the distance between a first section (92f) of the clamp strap (80f) and a second section (94f) of the clamp strap (80f), said second section being adjacent to a free end (84f) of the clamp strap (80f) running substantially parallel to said first section.

25. Linear guide arrangement according to claim 23, **characterised in that** the fixing device (82g-82i) comprises a device for changing the distance between a first clamp strap part (80g-80i) and a second clamp strap part (104g-104i), said second clamp strap part being adjacent to a free end (84g-84i) of the clamp strap running substantially parallel to said first clamp strap part.

26. Linear guide arrangement according to claim 25, **characterised in that** the middle section (88g-88i) of the clamp strap unit (32g-32i) is provided on the first clamp strap part (80g-80i).

27. Linear guide arrangement according to claim 25, **characterised in that** the second clamp strap part (104h, 104i) is supported on a side of the first clamp strap part (80h, 80i) facing away from the cover strip (24h, 24i).

28. Linear guide arrangement according to claim 27, **characterised in that** the second clamp strap part (104h) is supported on the first clamp strap part (80h) in the middle section (88h) of the clamp strap unit (32h).

29. Linear guide arrangement according to claim 27, **characterised in that** the second clamp strap part (104i) is supported on a section (108i) of the first clamp strap part (80i) which connects to the middle section (88i) on the side opposite the free end (86i) of the first clamp strap part (80i).

30. Linear guide arrangement according to claim 23, **characterised in that** the fixing device (82k-82m) comprises a clamping element which forms one of the free ends of the clamp strap unit (32k-32m).

31. Linear guide arrangement according to claim 30, **characterised in that** the clamping element comprises a straining screw (82k-82m) which is screwed to the clamp strap (801-80m) or at least to a clamp strap part.

32. Linear guide arrangement according to claim 31, **characterised in that** the straining screw (82m) has a, preferably conically, widening head (114m) and a screw axis (A) preferably running orthogonal to the plane (E) of the cover strip, said head engaging, with the tapering head surface, in a lateral longitudinal groove (48m) of the guide rail (12m).

33. Linear guide arrangement according to claim 31, **characterised in that** the straining screw (82k) has a preferably conically, tapering tip (110k) and a screw axis (A) preferably running substantially in the transverse direction (Q) of the cover strip (24k), said tapering tip being adjacent, with the tapering tip surface (110k), to an edge (112k) of a longitudinal groove (48k) at the side of the guide rail (12k).

34. Linear guide arrangement according to claim 31, **characterised in that** the straining screw (82l) acts laterally on the guide rail (12l), its screw axis (A) running at least partially in a direction substantially orthogonal to the plane (E) of the cover strip.

35. Linear guide arrangement according to claim 23, **characterised in that** the fixing device (122n) comprises a cam (124n) which is rotatably mounted around an axis in the middle section of the clamp strap unit (32n) and is pressed with its peripheral surface against the cover strip (24n).

36. Linear guide arrangement according to claim 23, **characterised in that** the clamp strap (80o), in the region (132o) of a side edge of the cover strip (24o), is spaced a greater orthogonal distance from the cover strip (24o) than in the region (130o) of the other respective side edge, and **in that** the fixing device comprises a spline (126o) displaceable in the transverse direction (Q) of the cover strip (24o).

37. Linear guide arrangement according to any of claims 1 to 36, **characterised in that** the cover strip (24a-24q) is snapped onto the guide rail (12a-12q) with its side edges.

38. Linear guide arrangement according to claims 23 and 37, **characterised in that** the fixing device (82p), for example the straining screw, presses laterally against one of the side edges (140p) of the cover strip (24p).

39. Linear guide arrangement according to claim 21, **characterised in that** the clamp strap (80r) comprises a separate, but preferably connected, spring element (142r), pressing the cover strip (24r) against the guide rail (12r).

40. Linear guide arrangement according to claim 39, **characterised in that** the spring element (142r) is designed as a domed leaf spring which is connected in its middle section (144r) to the clamp strap (80r) and presses the cover strip (24r) against the guide rail (12r) with its two free ends (148r).

41. Linear guide arrangement according to claim 23, **characterised in that** the fixing device comprises a device (154s/156s) for changing the transverse distance between two clamp strap parts (150s, 152s), each of which comprises one of the free ends (84s, 86s) of the clamp strap unit (32s).

42. Linear guide arrangement according to claim 41, **characterised in that** the two clamp strap parts (150s, 152s) are substantially identical in design.

43. Linear guide arrangement according to claim 41 or 42, **characterised in that** at least one of the two clamp strap parts (150s, 152s) has a respective bulge (160s) and/or a bead in the region of the middle section of the cover strip (24s), with said bulge or bead being adjacent to the cover strip (24s).

44. Linear guide arrangement according to any of claims 41 to 43, **characterised in that** the shape of the free end (84s, 86s), engaged with the guide rail (12s), of at least one of the clamp strap parts (150s, 152s) is configured to conform to the surface profile of the guide rail (12s).

## Revendications

1. Dispositif de guidage linéaire (10a à 10e) comprenant un rail de guidage allongé (12a à 12e) et un chariot (14a) mobile sur le rail de guidage (12a à 12e) dans la direction longitudinale (L) de celui-ci,
une surface du rail de guidage (12a à 12e) tournée vers le chariot (14a) étant recouverte au moyen d'une bande de recouvrement (24a à 24e),
une unité de blocage de bande (32a à 32e) étant en outre disposée dans la zone de chacune des deux extrémités longitudinales (30a) du rail de guidage (12a à 12e), et
les deux unités de blocage de bande (32a à 32e) bloquant conjointement la bande de recouvrement (24a à 24e) sur le rail de guidage (12a à 12e), au moins en ce qui concerne son déplacement dans la direction longitudinale (L) du rail de guidage (12a à 12e),
au moins une unité de blocage de bande (32a à 32e) formant une liaison d'entraînement de manière solidaire avec correspondance de forme avec la bande de recouvrement (24a à 24e),
**caractérisé en ce que** chacune des unités de blocage de bande (24a à 24e) est maintenue de manière solidaire par une liaison dynamique sur le rail de guidage (12a à 12^{e}), chacune des unités de blocage de bande (32a à 32e) rendant au moins difficile un déplacement de la bande de recouvrement (24a à 24e) relativement au rail de guidage (12a à 12e) orienté vers l'autre unité de blocage de bande (32a à 32e).

2. Dispositif de guidage linéaire selon la revendication 1, **caractérisé en ce que** l'unité de blocage de bande (32a à 32e) présente au moins un appendice de serrage (46a à 46e) qui est appliqué de préférence latéralement contre le rail de guidage (12a à 12e).

3. Dispositif de guidage linéaire (10a, 10c à 10e) comprenant un rail de guidage allongé (12a, 12c à 12e) et un chariot (14a) mobile sur le rail de guidage (12a, 12c à 12e) dans la direction longitudinale (L) de celui-ci,
une surface du rail de guidage (12a, 12c à 12e) tournée vers le chariot (14a) étant recouverte au moyen d'une bande de recouvrement (24a, 24c à 24e),
une unité de blocage de bande (32a, 32c à 32e) étant en outre disposée dans la zone de chacune des deux extrémités longitudinales (30a) du rail de guidage (12a, 12c à 12e), et
les deux unités de blocage de bande (32a, 32c à 32e) bloquant conjointement la bande de recouvrement (24a, 24c à 24e) sur le rail de guidage (12a, 12c à 12e), au moins en ce qui concerne son déplacement dans la direction longitudinale (L) du rail de guidage (12a, 12c à 12e),
au moins une unité de blocage de bande (32a, 32c à 32e) formant une liaison d'entraînement de manière solidaire avec correspondance de forme avec la bande de recouvrement (24a, 24c à 24 e),
**caractérisé en ce que** chacune des unités de blocage de bande (32a, 32c à 32e) empêche, par une prise de manière solidaire avec correspondance de forme, exempte d'assemblage à vis, d'une surface de butée de l'unité de blocage de bande (32a, 32c à 32e) avec une surface de butée opposée du rail de guidage (12a, 12c à 12e), un déplacement de la bande de guidage (24a à 24e) relativement au rail de guidage (12a, 12c à 12e) orienté vers l'autre unité de blocage de bande (32a, 32a à 32e).

4. Dispositif de guidage linéaire selon l'une quelconque des revendications 1 à 3, **caractérisé en ce qu'**il est prévu, sur l'une (32a à 32e) des parties, unité de blocage de bande ou bande de recouvrement, au moins un appendice (34a à 34e) qui s'engage dans un évidement 36a à 36e) associé, prévu sur l'autre partie (24a à 24e), bande de recouvrement ou unité de blocage de bande.

5. Dispositif de guidage linéaire selon la revendication 4, **caractérisé en ce que** la bande de recouvrement (24a, 24b, 24d, 24e) présente, de préférence approximativement dans son milieu transversal, au moins un évidement (36a, 36b, 36d, 36e) dans lequel un appendice latéral (34a, 34b, 34d, 34e) de l'unité de blocage de bande (32a, 32b, 32d, 32e) s'engage dans une direction s'étendant essentiellement orthogonalement au plan de la bande (E).

6. Dispositif de guidage linéaire selon la revendication 4, **caractérisé en ce que** la bande de recouvrement (24c) présente au moins un évidemment latéral (36c) dans lequel un appendice (34c) de l'unité de blocage de bande (32c) s'engage essentiellement dans la direction transversale (Q) de la bande de recouvrement (24c).

7. Dispositif de guidage linéaire selon la revendication 5 ou 6, **caractérisé en ce que** l'appendice (34c) est relié à l'unité de blocage de bande (24c) par l'intermédiaire d'une barrette flexible (52c).

8. Dispositif de guidage linéaire selon l'une quelconque des revendications 5 à 7, **caractérisé en ce que** l'appendice (34a à 34c) est formé d'une seule pièce sur l'unité de blocage de bande (24a à 24c).

9. Dispositif de guidage linéaire selon l'une quelconque des revendications 5 à 7, **caractérisé en ce que** l'appendice (34d, 34e) est un élément formé séparément d'une partie de base de l'unité de blocage de bande (32d, 32e).

10. Dispositif selon l'une quelconque des revendications 1, 2 ou 4 à 9, **caractérisé en ce que** l'unité de blocage de bande (32a, 32c à 32e) est maintenue de manière solidaire avec correspondance de forme sur le rail de guidage (12a, 12c à 12e), au moins en ce qui concerne un déplacement orienté vers l'autre unité de blocage de bande (32a, 32c à 32e).

11. Dispositif de guidage linéaire selon la revendication 3 ou 10, **caractérisé en ce que** l'unité de blocage de bande (32a, 32c à 32e) présente une bride (38a, 38d, 38e) s'étendant essentiellement orthogonalement à la direction longitudinale (L) du rail de guidage (12a, 12d, 12e) qui, lorsque le dispositif de guidage linéaire est monté, repose contre une face frontale (40a, 40d) du rail de guidage (12a, 12c à 12e).

12. Dispositif de guidage linéaire selon l'une quelconque des revendications 1 à 11, **caractérisé en ce que** la bande de recouvrement (24d, 24e) présente une longueur plus grande que le rail de guidage (12d, 12e) et que la bande de recouvrement (24d, 24e) est reliée de manière solidaire avec correspondance de forme avec l'unité de blocage de bande (32d, 32e) dans un segment dépassant du rail de guidage (12d, 12e).

13. Dispositif de guidage linéaire selon la revendication 12, **caractérisé en ce que** l'unité de blocage de bande (32d, 32e) présente une cavité, de préférence un passage (62d, 62e), dans lequel peut être logé le segment de la bande de recouvrement (24d, 24e) dépassant du rail de guidage (12d, 12e).

14. Dispositif de guidage selon la revendication 13, **caractérisé en ce que** l'unité de blocage de bande (32) est formée d'au moins deux parties (66e, 68e), une partie (66e) présentant une surface de délimitation supérieure et l'autre partie (68e) une surface de délimitation inférieure de la cavité (62e) et les deux surfaces de délimitation latérales de la cavité (62e) étant formées de préférence sur une et même partie (66e).

15. Dispositif de guidage linéaire selon la revendication 14, **caractérisé en ce que** les deux parties au moins (66e, 68e) peuvent être enclenchées l'une avec l'autre (70e).

16. Dispositif de guidage linéaire selon l'une quelconque des revendications 1 à 15, **caractérisé en ce que** l'unité de blocage de bande (32a à 32e) est réalisée au moins en partie comme une pièce moulée par injection en matière plastique ou en métal.

17. Dispositif de guidage linéaire (10f à 10q) comprenant un rail de guidage allongé (12f à 12q) et un chariot (14f) mobile sur le rail de guidage (12f à 12q) dans la direction longitudinale (L) de celui-ci,
une surface du rail de guidage (12f à 12q) tournée vers le chariot (14f) étant recouverte au moyen d'une bande de recouvrement (24f à 24q) et,
une unité de blocage de bande (32f à 32q) étant en outre disposée dans la zone d'au moins une des deux extrémités longitudinales du rail de guidage (12f à 12q),
**caractérisé en ce que** l'unité de blocage de bande (32f à 32q) est en prise de manière solidaire par une liaison dynamique aussi bien avec la bande de recouvrement (24f à 24q) qu'avec le rail de guidage (12f à 12q).

18. Dispositif de guidage linéaire selon la revendication 17, **caractérisé en ce que** l'unité de blocage de bande est conçue comme une unité d'étrier de serrage (32f à 32q).

19. Dispositif de guidage linéaire selon la revendication 18, **caractérisé en ce que** l'unité d'étrier de serrage (32f à 32q) présente deux extrémités libres (84f à 84i, 82k à 82m, 84n à 84q, 86f à 86o, 82p, 86q) qui sont appliqués latéralement sur le rail de guidage (12f à 12q), de préférence dans une rainure longitudinale (48f à 48q) du rail de guidage (12f à 12q).

20. Dispositif de guidage linéaire selon la revendication 18 ou 19, **caractérisé en ce que** l'unité d'étrier de serrage (32f à 32o, 32q) appuie la bande de recouvrement (24f à 24o, 24q) contre le rail de guidage (12f à 12o, 1 2q) dans un segment central disposé entre ses deux extrémités libres.

21. Dispositif de guidage linéaire selon l'une quelconque des revendications 18 à 20, **caractérisé en ce que** l'unité d'étrier de serrage (32f à 32q) présente un étrier de serrage (80f à 80q) réalisé en une ou plusieurs parties, qui est fabriqué de préférence dans un matériau élastique.

22. Dispositif de guidage linéaire selon la revendication 21, **caractérisé en ce que** l'étrier de serrage (80f, 80k à 80m, 80q) ou au moins une partie d'étrier de serrage (80g à 80i) est formé, dans la zone du segment central de l'unité d'étrier de serrage (32f à 32m, 32q), avec une courbure (90f à 90m, 90q) en forme de moulure.

23. Dispositif de guidage linéaire selon l'une quelconque des revendications 18 à 22, **caractérisé en ce que** l'unité d'étrier de serrage (32f à 32p) comprend un dispositif de fixation (82f à 82m, 122n, 128o, 82p) au moyen duquel la force de compression de l'unité d'étrier de serrage (32f à 32p) contre la bande de recouvrement (24f à 24p) est réglable.

24. Dispositif de guidage linéaire selon la revendication 23, **caractérisé en ce que** le dispositif de fixation (82f) comprend un dispositif pour modifier l'écart entre un premier segment (92f) de l'étrier de serrage (80f) et un deuxième segment (94f) s'étendant de préférence essentiellement parallèlement au premier, adjacent à une extrémité libre (84f) de l'étrier de serrage (80f).

25. Dispositif de guidage linéaire selon la revendication 23, **caractérisé en ce que** le dispositif de fixation (82g à 82i) comprend un dispositif pour modifier l'écart entre une première partie d'étrier de serrage (80g à 80i) et une deuxième partie d'étrier de serrage (104g à 104i) s'étendant de préférence essentiellement parallèlement à la première, adjacente à une extrémité libre (84g à 84i) de l'étrier de serrage.

26. Dispositif de guidage linéaire selon la revendication 25, **caractérisé en ce que** le segment central (88g à 88i) de l'unité d'étrier de serrage (32g à 32i) est prévu sur la première partie d'étrier de serrage (80g à 80i).

27. Dispositif de guidage linéaire selon la revendication 25, **caractérisé en ce que** la deuxième partie d'étrier de serrage (104h, 104i) s'appuie sur un côté de la première partie d'étrier de serrage (80h, 80i) opposé à la bande de recouvrement (24h, 24i).

28. Dispositif de guidage linéaire selon la revendication 27, **caractérisé en ce que** la deuxième partie d'étrier de serrage (104h) s'appuie sur la première partie d'étrier de serrage (80h) dans le segment central (88h) de l'unité d'étrier de serrage (32h).

29. Dispositif de guidage linéaire selon la revendication 27, **caractérisé en ce que** la deuxième partie d'étrier de serrage (104i) s'appuie sur un segment (108i) de la première partie d'étrier de serrage (80i) qui fait suite au segment central (88i) du côté opposé à l'extrémité libre (86i) de la première partie d'étrier de serrage (80i).

30. Dispositif de guidage linéaire selon la revendication 23, **caractérisé en ce que** le dispositif de fixation (82k à 82m) comprend un élément de fixation que forme l'une des extrémités libres de l'unité d'étrier de serrage (32k à 32m).

31. Dispositif de guidage linéaire selon la revendication 30, **caractérisé en ce que** l'élément de fixation comprend une vis de fixation (82k à 82m) qui est en prise par vissage avec l'étrier de serrage (80l et 80m) ou au moins une partie d'étrier de serrage.

32. Dispositif de guidage linéaire selon la revendication 31, **caractérisé en ce que** la vis de fixation (82m) présente une tête (114m) s'élargissant, de préférence en forme de cône, et un axe de vis (A) s'étendant de préférence orthogonalement au plan de la bande de recouvrement (E), ledit axe s'engageant avec la surface de tête s'effilant dans une rainure longitudinale latérale (48m) du rail de guidage (12m).

33. Dispositif de guidage linéaire selon la revendication 31, **caractérisé en ce que** la vis de fixation (82k) présente une pointe (110k) s'effilant, de préférence en forme de cône, et un axe de vis (A) s'étendant de préférence essentiellement dans la direction transversale (Q) de la bande de recouvrement (24k), ledit axe reposant, avec la surface de pointe (110k) s'effilant, contre une arête (112k) d'une rainure longitudinale latérale (48k) du rail de guidage (12k).

34. Dispositif de guidage linéaire selon la revendication 31, **caractérisé en ce que** la vis de fixation (82l) est appliquée latéralement contre le rail de guidage (12l), son axe de vis (A) s'étendant au moins partiellement dans une direction essentiellement orthogonale au plan de la bande de recouvrement (E).

35. Dispositif de guidage linéaire selon la revendication 23, **caractérisé en ce que** le dispositif de fixation (122n) présente une excentrique (124n) qui est montée sur l'unité d'étrier de serrage (32n), dans le segment central de celle-ci, de manière à pouvoir tourner autour d'un axe et peut être comprimée avec sa surface circonférentielle contre la bande de recouvrement (24n).

36. Dispositif de guidage linéaire selon la revendication 23, **caractérisé en ce que** l'étrier de serrage (80o) présente, dans la zone (132o) d'un bord latéral de la bande de recouvrement (24o), un écart orthogonal par rapport à celle-ci plus grand que dans la zone (130o) de l'autre bord latéral et que le dispositif de fixation comprend une clavette coulissante déplaçable dans la direction transversale (Q) de la bande de recouvrement (24o).

37. Dispositif de guidage linéaire selon l'une quelconque des revendications 1 à 36, **caractérisé en ce que** la bande de recouvrement (24a à 24q) est enclenchée avec ses bords latéraux sur le rail de guidage (12a à 12q).

38. Dispositif de guidage linéaire selon les revendications 23 et 37, **caractérisé en ce que** le dispositif de fixation (82p) tel que la vis de fixation, par exemple, appuie latéralement contre l'un des bords latéraux (140p) de la bande de recouvrement (24p).

39. Dispositif de guidage linéaire selon la revendication 21, **caractérisé en ce que** l'étrier de serrage (80r) comprend un élément ressort (142r), formé séparément de celui-ci mais de préférence relié à celui-ci, qui appuie la bande de recouvrement (24r) contre le rail de guidage (12r).

40. Dispositif de guidage linéaire selon la revendication 39, **caractérisé en ce que** l'élément ressort (142r) est formé comme un ressort en forme d'étrier qui est relié dans sa partie centrale (144r) avec l'étrier de serrage (80r) et appuie la bande de recouvrement (24r) contre le rail de guidage (12r) avec ses deux extrémités libres (148r).

41. Dispositif de guidage linéaire selon la revendication 23, **caractérisé en ce que** le dispositif de fixation comprend un dispositif (154s/156s) destiné à modifier l'écart transversal entre deux parties d'étrier de serrage (150s, 152s), dont chacune présente une des extrémités libres (84s, 86s) de l'unité d'étrier de serrage (32s).

42. Dispositif de guidage linéaire selon la revendication 41, **caractérisé en ce que** les deux parties d'étrier de serrage (150s, 152s) sont formées essentiellement de manière identique.

43. Dispositif de guidage linéaire selon la revendication 41 ou 42, **caractérisé en ce qu'**au moins une des deux parties d'étrier de serrage (150s, 152s) présente, dans la zone du segment central de la bande de recouvrement (24s), un bourrelet (160s) ou/et une moulure qui repose contre la bande de recouvrement (24s).

44. Dispositif de guidage linéaire selon l'une quelconque des revendications 41 à 43, **caractérisé en ce que** la configuration de l'extrémité libre (84s, 86s) d'au moins une des parties d'étrier de serrage (150s, 152s) en prise avec le rail de guidage (12s) est prévue pour s'adapter au profil de surface du rail de guidage (12s).
